# EUROPEAN PATENT APPLICATION

(11) **EP 4 216 582 A1**
(43) Date of publication of application: **26.07.2023**
(21) Application number: 21884983.4
(22) Date of filing: 19.10.2021
(51) Int. Cl.: H04W 4/70

(54) **ENERGY SAVING METHOD AND TERMINAL DEVICE**

(30) Priority: 29.10.2020 CN 202011186642; 31.03.2021 CN 202110349561
(71) Applicant: Huawei Technologies Co., Ltd., Shenzhen, Guangdong 518129 (CN)
(72) Inventor: SONG, Mingdong, Shenzhen, Guangdong 518129 (CN); WANG, Huaiyong, Shenzhen, Guangdong 518129 (CN)
(74) Representative: Pfenning, Meinig & Partner mbB
(86) International application number: PCT/CN2021/124759
(87) International publication number: WO 2022/089255

(57) **Abstract**

An energy-saving method and a terminal device are provided. The energy-saving method may be performed by a first terminal device, and the first terminal device and a second terminal device are bound with a one-number-multi-terminal service. The energy-saving method includes: when a condition for power saving is satisfied, performing a power-off operation on a baseband module and an AP core of the first terminal device, and controlling a Bluetooth module of the first terminal device to be in a power-on state. Because the first terminal device and the second terminal device are bound with the one-number-multi-terminal service, when a baseband module of the second terminal device is in a power-on state, the first terminal device and the second terminal device may communicate with each other by using the Bluetooth module, and a function, for example, calling, of the first terminal device is not affected. In addition, compared with power-off of some cores running on a main processor, in this method, all cores of the main processor stop running, and the baseband module is in a power-off state, so that power can be further saved.

## Description

### CROSS-REFERENCE TO RELATED APPLICATIONS

This application claims priority to Chinese Patent Application No. 202011186642.7, filed with the China National Intellectual Property Administration on October 29, 2020 and entitled "METHOD FOR SAVING POWER ON MOBILE DEVICE AT NIGHT", which is incorporated herein by reference in its entirety. This application claims priority to Chinese Patent Application No. 202110349561.2, filed with the China National Intellectual Property Administration on March 31, 2021 and entitled "ENERGY-SAVING METHOD AND TERMINAL DEVICE", which is incorporated herein by reference in its entirety.

### TECHNICAL FIELD

This application relates to the field of energy-saving technologies, and in particular, to an energy-saving method and a terminal device.

### BACKGROUND

With development of terminal devices, for example, when screens of the terminal devices are increasingly larger, and more functional modules are disposed in the terminal devices, power consumption of the terminal devices is increasingly higher. How to reduce energy consumption of the terminal devices has been a concern in the industry. For example, power consumption of a terminal device may be reduced through scheduled turn-on and turn-off. However, because of the scheduled turn-on and turn-off, it is inevitable that the terminal device may automatically shut down when a user is using the terminal device, resulting in poor user experience. For another example, if a terminal device has not been used for a long time, the terminal device may be set to a standby mode, and some cores run by a processor of the terminal device may be turned off, so that the terminal device turns off a screen, suspends network access, and the like. However, because more functional modules are disposed in the terminal device, even if the terminal device enters the standby mode, some functional modules are still running, and power consumption of the terminal device is still high.

### SUMMARY

This application provides an energy-saving method and a terminal device, to reduce energy consumption of the terminal device and ensure a relatively long run time of the terminal device.

According to a first aspect, an embodiment of this application provides an energy-saving method. The method may be performed by a first terminal device, and the first terminal device and a second terminal device are bound with a one-number-multi-terminal service. The method includes:
when a condition for power saving is satisfied, performing a power-off operation on a baseband module and an application processor (application processor, AP) core of the first terminal device, and controlling a Bluetooth module of the first terminal device to be in a power-on state. In this solution, the first terminal device (for example, a smart watch) and the second terminal device (for example, a mobile phone) are bound with the one-number-multi-terminal service, and the first terminal device and the second terminal device may communicate with each other by using the Bluetooth module. When the first terminal device satisfies the condition for power saving, the power-off operation may be performed on the baseband module and the AP. Because a baseband module of the second terminal device is in the power-on state, the first terminal device and the second terminal device may communicate with each other by using the Bluetooth module, and a function, for example, calling, of the first terminal device is not affected. In addition, compared with power-off of some cores running on a main processor, in this solution, a main processor and the baseband module are powered off, that is, all cores of the main processor stop running, and the baseband module is in a power-off state, so that clearly, power can be further saved to a maximum degree.

In a possible design, the performing a power-off operation on a baseband module and an AP core of the first terminal device includes:
controlling to power off a main processor of the first terminal device, where the AP core is integrated into the main processor, the Bluetooth module of the first terminal device is connected to a coprocessor of the first terminal device, the coprocessor is configured to control the Bluetooth module to communicate with the second terminal device, the coprocessor is connected to the main processor, and the coprocessor and the main processor run different operating systems; or
controlling to power off a main processor of the first terminal device, where the AP core, the baseband module, and the Bluetooth module are integrated into the main processor, the Bluetooth module may be configured to respond to a wake-up message from the second terminal device, and the wake-up message is used to indicate a task for waking up the baseband module and/or the AP core.

This solution provides two designs of the first terminal device. In one design, the baseband module and the AP core are integrated into the main processor, and the Bluetooth module may be integrated into the coprocessor or be independent of the coprocessor. In the other design, the baseband module, the AP core, and the Bluetooth module are all integrated into the main processor, and the coprocessor may not be disposed. In this design, the Bluetooth module may independently perform a wake-up task, for example, perform wake-up when receiving an instruction from another device; or the Bluetooth module may perform wake-up according to a set interrupt task. This is not limited in this embodiment of this application. In either design, it can be ensured that a function of the baseband module of the first terminal device is not affected after the baseband module and the AP core of the first terminal device are powered off.

In a possible design, the condition for power saving includes at least one of the following conditions:
a user using the first terminal device and the second terminal device falls asleep;
the first terminal device or the second terminal device is in a profile mode, a manner mode, a do-not-disturb mode, or a conference mode;
first scenario information of the first terminal device or the second terminal device satisfies a preset condition, where the first scenario information includes at least one of information about a location of a scenario and information about a time for power saving;
the first terminal device or the second terminal device is in a preset power-saving time period;
the first terminal device or the second terminal device is in a power-saving mode; and
first power-saving instruction information from the second terminal device is received, where the first power-saving instruction information instructs the first terminal device to perform a power-off operation.

In this solution, some implementations of the condition for power saving are listed. For example, when the user is in sleep, the first terminal device or the second terminal device is in the profile mode or the power-saving mode, or the preset power-saving time period, it may be considered that the first terminal device may currently enable power saving, to reduce energy consumption of the first terminal device to a maximum degree.

In a possible design, the method further includes:
obtaining first configuration information from the second terminal device, where the first configuration information is used to determine whether the first terminal device satisfies the condition for power saving, and the first configuration information is used to indicate at least one of the first scenario information of the second terminal device, the preset power-saving time period for the second terminal device, and whether the second terminal device is currently in the power-saving mode. It should be understood that, the first terminal device may autonomously determine whether the condition for power saving is satisfied, or may obtain configuration information that indicates the condition for power saving from the second terminal device, to determine whether the condition for power saving is satisfied, thereby avoiding wrongly determining whether the condition for power saving is satisfied.

In a possible design, the method further includes:
when the condition for power saving is not satisfied, performing a power-on operation on the baseband module and the AP core of the first terminal device. It should be understood that, when the terminal device does not satisfy the condition for power saving, the first terminal device may restore power to the baseband module and the AP core, to avoid impact on a normal function of the first terminal device.

In a possible design, the performing a power-on operation on the baseband module and the AP core of the first terminal device includes:
controlling, by the coprocessor, a power management module of the main processor to power on the main processor again.

In a possible design, before the performing a power-off operation on a baseband module and an AP core of the first terminal device, the method further includes:
determining that a device that needs to save power in the first terminal device and the second terminal device is the first terminal device; or determining that a device that needs to save power in the first terminal device and the second terminal device is the second terminal device, and then sending second power-saving instruction information to the second terminal device, where the second power-saving instruction information instructs the second terminal device to perform a power-off operation.

In this solution, as the first terminal device and the second terminal device are not affected as long as the baseband module of either the first terminal device or the second terminal device is on after a connection is established between the first terminal device and the second terminal device, it may be determined that the first terminal device or the second terminal device enables power saving. For example, if a battery level of the second terminal device is lower than a battery level of the first terminal device, it may be determined that the second terminal device enables power saving, to ensure reasonable energy saving on the first terminal device and the second terminal device as far as possible.

A manner of determining whether the first terminal device or the second terminal device enables power saving is not limited in this embodiment of this application. Several possible designs are listed below.

In a possible design, that the first terminal device determines the device that needs to save power in the first terminal device and the second terminal device includes:
determining information about a target battery level of the second terminal device, where the information about the target battery level is used to indicate that a remaining battery level of the second terminal device is a first battery level (a remaining battery time); and
comparing a current battery level of the first terminal device with the first battery level, and determining that a terminal device corresponding to a lower battery level in the current battery level and the first battery level is the device that needs to save power.

In a possible design, that the first terminal device determines the device that needs to save power in the first terminal device and the second terminal device includes:
obtaining a performance parameter of the second terminal device, where the performance parameter is used to indicate a performance indicator of the second terminal device; and
comparing a performance indicator of the first terminal device with the performance indicator of the second terminal device, and determining that a terminal device corresponding to a lower performance indicator is the device that needs to save power.

In a possible design, before the first terminal device determines that the terminal device corresponding to the lower battery level is the device that needs to save power, the method further includes:
determining that the terminal device corresponding to the lower battery level is in an uncharged state.

In a possible design, the method further includes:
obtaining historical sleep data of the user, and determining an earliest wake-up time of the user based on the historical sleep data; and
sending first update information to the second terminal device, where the first update information is used to update an automatic turn-on time of the second terminal device.

In this solution, as power consumption of a terminal device may be reduced by scheduling the device to turn on and off, the turn-on and turn-off are scheduled, and it is inevitable that the terminal device may automatically shut down when a user is using the terminal device, resulting in poor user experience. In this solution, a turn-on time and a turn-off time of another electronic device, for example, a mobile phone, may be flexibly set according to sleep habits of a user, to reduce energy consumption of a terminal device to a maximum degree and ensure relatively good user experience.

According to a second aspect, an embodiment of this application provides another energy-saving method. The method may be performed by a second terminal device, and the second terminal device and a first terminal device are bound with a one-number-multi-terminal service. The method includes:
receiving first indication information from the first terminal device, where the first indication information indicates that the second terminal device satisfies a condition for power saving; and performing a power-off operation on a baseband module and an AP core of the second terminal device, and controlling a Bluetooth module of the second terminal device to be in a power-on state. In this solution, when determining that the second terminal device satisfies the condition for power saving, the first terminal device may notify the second terminal device to save power. Because the first terminal device (for example, a smart watch) and the second terminal device (for example, a mobile phone) are bound with the one-number-multi-terminal service, and the first terminal device and the second terminal device may communicate with each other by using the Bluetooth module, even if the second terminal device enables power saving, a function, for example, calling, of the second terminal device is not affected. Compared with power-off of some cores running on the main processor, in this solution, the main processor and the baseband module are powered off, that is, all cores of the main processor stop running, and the baseband module is in a power-off state, so that clearly, power can be further saved to a maximum degree.

In a possible design, the performing a power-off operation on a baseband module and an AP core of the second terminal device includes:
controlling to power off a main processor of the second terminal device, where the AP core is integrated into the main processor, the Bluetooth module is connected to a coprocessor of the second terminal device, the coprocessor is configured to control the Bluetooth module to communicate with the first terminal device, the coprocessor is connected to the main processor, and the coprocessor and the main processor run different operating systems; or
controlling to power off a main processor of the second terminal device, where the AP core, the baseband module, and the Bluetooth module are integrated into the main processor, the Bluetooth module is configured to respond to a wake-up message from the first terminal device, and the wake-up message is used to indicate a task for waking up the baseband module and/or the AP core.

Similar to the first aspect, this solution provides two designs of the second terminal device. In one design, the baseband module and the AP core are integrated into the main processor, and the Bluetooth module may be integrated into the coprocessor or be independent of the coprocessor. In the other design, the baseband module, the AP core, and the Bluetooth module are all integrated into the main processor, and the coprocessor may not be disposed. In this design, the Bluetooth module may independently perform a wake-up task, for example, perform wake-up when receiving an instruction from another device; or the Bluetooth module may perform wake-up according to a set interrupt task. This is not limited in this embodiment of this application. In either design, it can be ensured that a function of the baseband module of the second terminal device is not affected after the baseband module and the AP core of the second terminal device are powered off.

In a possible design, the method further includes:
receiving second indication information from the first terminal device, where the second indication information indicates that the second terminal device does not satisfy the condition for power saving; and performing a power-on operation on the baseband module and the AP core of the second terminal device. It should be understood that, when determining that the second terminal device does not satisfy the condition for power saving, the first terminal device may notify the second terminal device to restore power to the baseband module and the AP core, to ensure a normal function of the second terminal device.

In a possible design, the condition for power saving includes at least one of the following conditions:
a user using the first terminal device and the second terminal device falls asleep;
the first terminal device or the second terminal device is in a profile mode, a manner mode, a do-not-disturb mode, or a conference mode;
first scenario information of the first terminal device or the second terminal device satisfies a preset condition, where the first scenario information includes at least one of information about a location of a scenario and information about a time for power saving;
the first terminal device or the second terminal device is in a preset power-saving time period; and
the first terminal device or the second terminal device is in a power-saving mode.

In this solution, some implementations of the condition for power saving are listed. For example, when the user is in sleep, the first terminal device or the second terminal device is in the profile mode or the power-saving mode, or the preset power-saving time period, it may be considered that the second terminal device may currently enable power saving, to reduce energy consumption of the second terminal device to a maximum degree.

According to a third aspect, a power saving control system is provided. The system includes the first terminal device and the second terminal device according to the first aspect or the second aspect and any one of the possible implementations of the first aspect or the second aspect.

According to a fourth aspect, an electronic device is provided. The electronic device may be the first terminal device according to the first aspect or the second terminal device according to the second aspect, and the electronic device includes one or more processors and one or more memories. The one or more memories are coupled to the one or more processors, and the one or more memories are configured to store computer program code. The computer program code includes computer instructions. When the one or more processors execute the computer instructions, the electronic device may perform the energy-saving method according to the first aspect or the second aspect and any one of the possible implementations of the first aspect or the second aspect.

According to a fifth aspect, a computer storage medium is provided. The computer storage medium includes computer instructions. When the computer instructions are run on an electronic device, the electronic device is enabled to perform the power saving control method according to the first aspect or the second aspect and any one of the possible implementations of the first aspect or the second aspect.

According to a sixth aspect, a computer program product is provided. When the computer program product runs on a computer, the computer is enabled to perform the power saving control method according to the first aspect or the second aspect and any one of the possible implementations of the first aspect or the second aspect.

For technical effects brought by any one of the possible implementations of the third aspect to the sixth aspect, refer to technical effects brought by the different implementations of the first aspect or the second aspect. Details are not described herein again.

It should be understood that the general descriptions above and the detailed descriptions below are merely examples for explanation, and do not limit the protection scope of this application.

### BRIEF DESCRIPTION OF DRAWINGS

FIG. 1 is a block diagram of a structure of a wearable device according to an embodiment of this application;
FIG. 2 is a block diagram of a structure of a non-wearable device according to an embodiment of this application;
FIG. 3A is a schematic diagram of a structure of a terminal device according to an embodiment of this application;
FIG. 3B is a schematic diagram of another structure of a terminal device according to an embodiment of this application;
FIG. 3C is a schematic diagram of still another structure of a terminal device according to an embodiment of this application;
FIG. 4A and FIG. 4B are a schematic flowchart of communication between a smart watch and a mobile phone according to an embodiment of this application;
FIG. 5 is a schematic flowchart of a first energy-saving method according to an embodiment of this application;
FIG. 6 is a schematic diagram of an energy-saving principle of a non-wearable device according to an embodiment of this application;
FIG. 7 is a schematic flowchart of a second energy-saving method according to an embodiment of this application;
FIG. 8 is a schematic diagram of an energy-saving principle of a non-wearable device according to an embodiment of this application;
FIG. 9 is a schematic flowchart of a third energy-saving method according to an embodiment of this application; and
FIG. 10 is a schematic flowchart of a fourth energy-saving method according to an embodiment of this application.

### DESCRIPTION OF EMBODIMENTS

To make the objectives, technical solutions, and advantages of this application clearer, more details of this application are described below with reference to the accompanying drawings.

Before this application is described, some terms and application scenarios used in embodiments of this application are briefly described and explained first, to help a person skilled in the art have a better understanding.

(1) A terminal device may be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable intelligent device, for example, a smart watch or smart glasses, may not rely on a smartphone to implement all or some functions. The wearable intelligent device, for example, various types of smart watches, smart bands, smart helmets, and smart accessories for physical sign monitoring, may alternatively focus on only a specific type of application function, and needs to be used with another device, for example, a smartphone.

Alternatively, the terminal device may be a non-wearable device, for example, a portable electronic device, for example, a mobile phone or a personal digital assistant (personal digital assistant, PDA). An example embodiment of a portable electronic device includes but is not limited to a portable electronic device using iOS^{®}, Android^{®}, Microsoft^{®}, or another operating system.

(2) Multi-device in a one-number-multi-device service can be considered as a plurality of terminal devices with different international mobile subscriber identification numbers (international mobile subscriber identification number, IMSI) but a same mobile station integrated services digital network (mobile station ISDN) number, public switched telephone network (public switched telephone network, PSTN) number, or mobile station international ISDN number (mobile station international ISDN number, MSISDN). The plurality of terminal devices may separately communicate with a network device (a base station). Communication between one terminal in the plurality of terminals and the network device may be switched to communication between another terminal and the network device. It should be understood that the one-number-multi-terminal service refers to a service commonly supported by the plurality of terminals, for example, calling, short messaging, network connection, or another function. Clearly, the one-number-multi-terminal service is not specifically limited in this embodiment of this application.

The foregoing plurality of terminals usually include one management device and at least one managed device. The management device may start the one-number-multi-terminal service for each managed device. To implement the one-number-multi-terminal service, a profile (profile) that has an association relationship with the management device needs to be loaded to an eSIM on the managed device in advance. For example, when a calling terminal initiates a call to a terminal corresponding to the MSISDN, because the management device and the managed device have the same MSISDN, both the management device and the managed device can receive the call, and both the management device and the managed device ring. In this case, a user can answer the call only using one terminal in the plurality of terminals, that is, a terminal that first responds to the call event serves as a called terminal to set up a call with the calling terminal. For example, during actual use of the management device and the managed device, if the management device and the managed device are separately used by different users, any one of the management device and the managed device that first puts the call through serves as the called terminal to set up a call with the calling terminal.

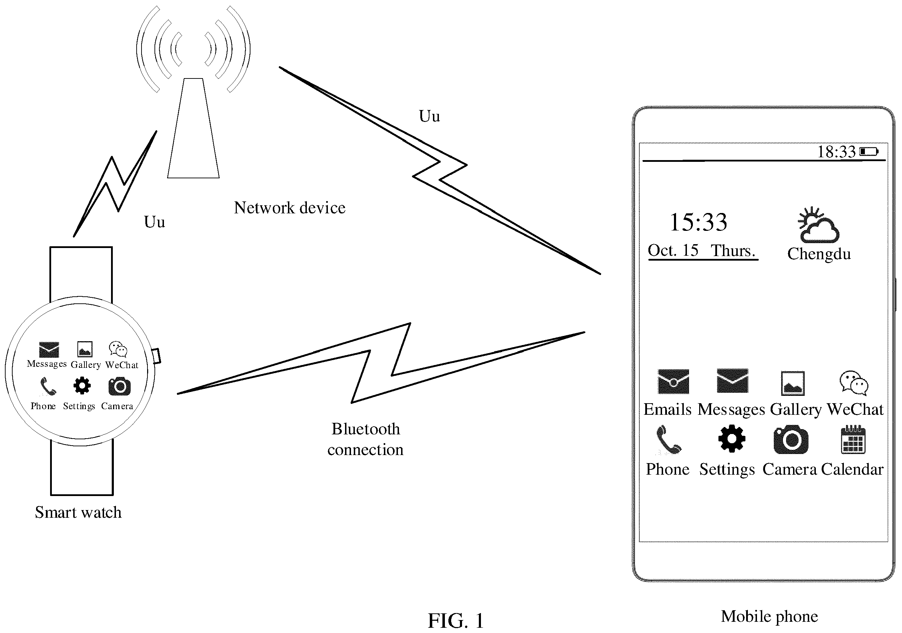

For ease of understanding, FIG. 1 is a schematic diagram of an application scenario according to an embodiment of this application. In FIG. 1, an example in which a plurality of terminals using one number include a smart watch and a mobile phone is used. It should be understood that a subscriber identity module (subscriber identity module, SIM) card is mounted on the mobile phone, and the mobile phone may communicate with a network device, to implement functions of the mobile phone, such as calling, short messaging, and network connection. An embedded subscriber identity module (embedded subscriber identity module, eSIM) card may be mounted on the smart watch. The smart watch can directly communicate with a network device (a base station) by using the eSIM card, to implement functions of the smart watch, such as calling, short messaging, and network connection. The eSIM card may be understood as abandonment of a pluggable physical entity like an insertable SIM. A universal integrated circuit card (universal integrated circuit card, UICC) is embedded in an electronic device (and cannot be separated from the electronic device), instead of being added to the smart watch as an independent removable component. The eSIM card, referred to as an embedded UICC (eUICC), is a blank SIM card preset in a chip on a device, and a carrier can dynamically write SIM card information to the eSIM card by using software. The eSIM card may store a plurality of types of eSIM profiles of the carrier, and each eSIM profile may independently form one SIM application. The SIM application may be referred to as an eSIM, and the eSIM may implement a function similar to that of an insertable SIM. The eSIM allows a user to more flexibly select plans provided by carriers or to change a carrier at any time without unlocking a device or buying a new device. An identifier used to identify the SIM and the eSIM may be referred to as an integrated circuit card identifier (integrated circuit card identifier, ICCID). An identifier used to identify the eUICC may be referred to as an embedded universal integrated circuit card identifier (eUICC identifier, EID).

If a phone number indicated by the eSIM card on the smart watch is the same as a phone number indicated by the SIM card on the mobile phone, the smart watch and the mobile phone can share call charges, mobile data, and the like. In this case, it may be considered that the smart watch and the mobile phone are terminals using one number, or it may be considered that the smart watch and the mobile phone have a capability of using one-number-multi-terminal.

In some embodiments, when a user goes running outdoors with the smart watch but not the mobile phone, the smart watch may directly communicate with the network device through a Uu interface. When the user goes home after running, the smart watch detects the mobile phone through a sidelink (sidelink, SL). In this case, the smart watch may automatically switch from a direct link to the network device to an indirect link with relay through the mobile phone, or the smart watch may switch, according to an operation of the user, from a direct link to the network device to an indirect link with relay through the mobile phone, that is, to access a network via the mobile phone.

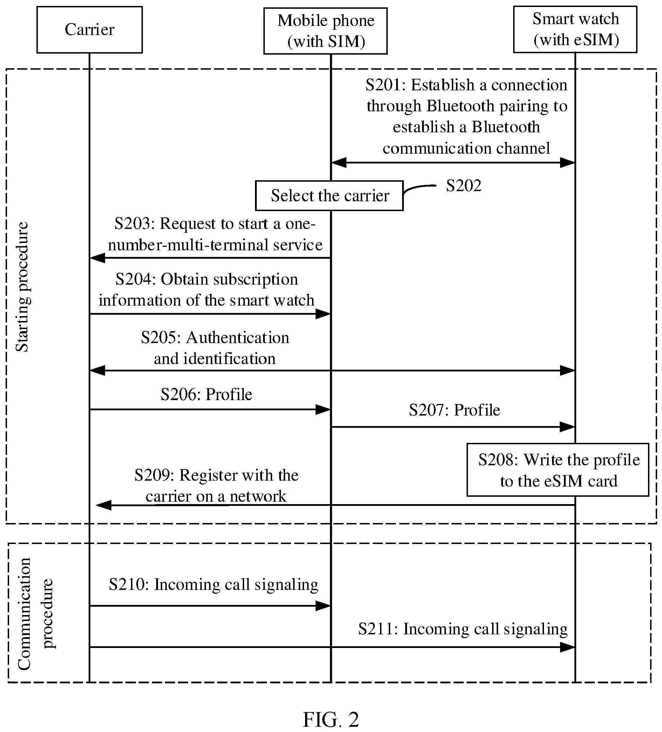

For example, for a process of implementing a call with the plurality of terminals using one number, refer to a procedure shown in FIG. 2. The process mainly includes a starting procedure and a communication procedure. The starting procedure refers to a procedure of starting the one-number-multi-terminal service on a plurality of terminal devices. The communication procedure refers to a procedure in which the plurality of terminals use the one-number-multi-terminal service. In FIG. 2, an example in which a plurality of terminals using one number include the smart watch and the mobile phone that are shown in FIG. 1 is used.

S201: The smart watch establishes a Bluetooth communication connection to the mobile phone.

It should be understood that a working principle of Bluetooth communication is a socket (Socket) mechanism. For example, two terminal devices perform Bluetooth communication. A socket is actually a communication endpoint, and both of the terminal devices can establish a socket. In this case, the two terminal devices may transmit data through the socket. For example, the two terminal devices include a terminal device 1 and a terminal device 2. The terminal device 1 writes data that needs to be transmitted to a socket of the terminal device 1, and the terminal device 1 sends the socket to the terminal device 2. After receiving the socket, the terminal device 2 may store the data in the received socket in a socket of the terminal device 2. In this way, data transmission between the two terminal devices is completed.

A process of establishing the Bluetooth communication connection between the smart watch and the mobile phone includes discovering, pairing, and connecting sequentially. To be specific, after the mobile phone discovers Bluetooth on the smart watch, the mobile phone performs Bluetooth pairing with the smart watch in response to an operation of a user on the mobile phone. After Bluetooth on the mobile phone and the smart watch is paired, the Bluetooth communication connection is established between the mobile phone and the smart watch. For example, an application (application, APP) for searching for a smart watch is installed on the mobile phone. When the mobile phone needs to establish a connection to the smart watch, the mobile phone may establish a socket, to send a Bluetooth connection request (or referred to as a Bluetooth packet) to the smart watch through the socket, for requesting to establish the Bluetooth communication connection to the smart watch. The smart watch detects the search of the mobile phone and also establishes a socket, and can listen on the Bluetooth connection request from the mobile phone through the socket. If the smart watch listens on the Bluetooth connection request from the mobile phone, the smart watch establishes the Bluetooth communication connection to the mobile phone in response to the Bluetooth connection request from the mobile phone.

S202: The mobile phone selects a carrier.

The mobile phone may select a carrier, to request the selected carrier to start the one-number-multi-terminal service for the smart watch. In some embodiments, an APP for selecting a carrier for the smart watch may be installed on the mobile phone. A user signs in to the APP by using the mobile phone, and selects a suitable carrier for the smart watch. In some other embodiments, after establishing the Bluetooth communication connection to the smart watch, the mobile phone may run, based on triggering of the user, the APP for selecting a carrier. For example, when receiving an operation of the user for starting the APP for selecting a carrier for the smart watch, the mobile phone invokes the APP. In still some other embodiments, after establishing the Bluetooth communication connection to the smart watch, the mobile phone may automatically run, by default, the APP for selecting a carrier for the smart watch.

S203: The mobile phone requests the carrier to start the one-number-multi-terminal service.

The mobile phone may request the selected carrier to start the one-number-multi-terminal service. For example, the mobile phone may send a first request message to the carrier device to request to start the one-number-multi-terminal service. In some embodiments, the first request message may be further used as a message for activating an eSIM card. For example, the first request message may carry some information for activating the eSIM card, for example, an IMSI corresponding to the eSIM card, a user identity card number corresponding to the IMSI, and information about a plan for activating the eSIM card, for example, a type of the plan. In this case, the first request message further carries information indicating a service type, to distinguish, based on the information indicating a service type, whether the first request message is used to request for the one-number-multi-terminal service or used to request to activate the eSIM card. For example, if the first request message does not carry the information indicating a service type, it may be considered that the first request message is used to request to activate the eSIM card; or if the first request message carries the information indicating a service type, it may be considered that the first request message is used to request to start the one-number-multi-terminal service.

S204: The carrier obtains subscription information of the smart watch from the mobile phone.

For example, the subscription information includes information related to an eSIM card on the smart watch, information related to the smart watch, and the like. For details, refer to information required by a carrier for starting any eSIM card service, for example, an IMSI corresponding to the eSIM card, a user identity card number corresponding to the IMSI, and information about a plan for activating the eSIM card, for example, a type of the plan.

S205: The carrier authenticates the smart watch.

A process in which the carrier authenticates the smart watch is similar to a process in which a carrier authenticates a mobile phone. For details, refer to the process in which a carrier authenticates a mobile phone. Details are not described herein.

S206: The carrier sends a profile to the mobile phone, and correspondingly, the mobile phone receives the profile from the carrier.

If the smart watch passes the authentication and identification of the carrier, the carrier agrees to start the one-number-multi-terminal service, and the carrier may send the profile to the mobile phone. In some embodiments, the carrier may generate the profile for starting the one-number-multi-terminal service, and send the profile to the mobile phone after encryption. The profile includes, for example, information about a SIM card on the mobile phone.

S207: The mobile phone sends the profile to the smart watch.

S208: The smart watch writes the profile to the eSIM card.

Because the profile carries the information about the SIM card on the mobile phone, the smart watch writes the profile to the eSIM card. In this way, the smart watch may have a same communication number (commonly referred to as a phone number) as the mobile phone.

S209: The smart watch registers with the carrier on a core network.

A procedure in which the smart watch registers with the carrier on the core networks with the core network of the carrier is similar to a procedure in which a mobile phone registers with a carrier on a core network. For details, refer to the process in which a mobile phone registers with a carrier on a core network. Details are not described herein.

S210: The carrier sends call signaling to the mobile phone.

S211: The carrier sends call signaling to the smart watch.

After the smart watch registers with the carrier on a network, the smart watch may communicate with the network device (the base station), to implement functions such as calling, short messaging, and network connection that are similar to those of the mobile phone. A function of calling is used as an example. When a calling terminal initiates a call to the mobile phone and the smart watch using a same communication number, the carrier sends the call signaling to the mobile phone and the carrier separately. A terminal that first responds to the call event serves as a called terminal to set up a call with the calling terminal.

It should be understood that after the smart watch starts the one-number-multi-terminal service, both the mobile phone and the smart watch store information indicating that the smart watch has started the one-number-multi-terminal service. The smart watch may query whether there is the information. If the information does not exist, the smart watch determines that the one-number-multi-terminal service has not been started. On the contrary, if the information exists, the smart watch may determine that the one-number-multi-terminal service has been started.

(3) In a relative sense, there are a main processor and a coprocessor that are located in a same terminal device. Both the main processor and the coprocessor may generate an operation control signal based on an instruction operation code and a time sequence signal, to complete control of instruction fetching and instruction execution, for implementing a corresponding function. A difference lies in that, compared with a processing capability of the coprocessor, a processing capability of the main processor is stronger, performance is better, and power consumption is higher. Usually, the two run different operating systems. For example, the main processor usually runs a heavyweight system, for example, a Linux operating system or an Android system; and the coprocessor usually runs a lightweight system, for example, a real-time (real-time) operating system (real-time operating system, RTOS). Specific implementations of the main processor and the coprocessor are described below.

(4) The terms "terminal" and "terminal device" may be used interchangeably in the embodiments of this application. The term "a plurality of' means two or more than two. The term "and/or" describes an association relationship for describing associated objects and represents that three relationships may exist. For example, A and/or B may represent the following three cases: Only A exists, both A and B exist, and only B exists. In addition, unless particularly stated, the character "/" generally indicates an "or" relationship between associated objects.

"At least one of the following items (pieces)" or a similar expression thereof refers to any combination of these items, including any combination of singular items (pieces) or plural items (pieces). For example, at least one of a, b, or c may represent: a, b, c, a and b, a and c, b and c, or a, b, and c, where a, b, and c may be singular or plural.

In addition, unless otherwise stated, in the embodiments of this application, ordinal numbers such as "first" and "second" are intended to distinguish between a plurality of objects, but are not intended to limit sizes, content, orders, time sequences, priorities, importance, or the like of the plurality of objects. For example, a first identifier and a second identifier may be a same identifier, or may be different identifiers. In addition, such a name does not indicate a difference of information sizes, content, priorities, importance, or the like between the two identifiers.

Some terms and concepts used in the embodiments of this application are described above. Technical features in the embodiments of this application are described below.

To reduce energy consumption of a terminal device, the terminal device may be set to a standby mode if the terminal device has not been used for a while. As the terminal device enters the standby mode, some cores run by a processor of the terminal device may be turned off, so that the terminal device turns off a screen, suspends network access, or disables other functions. However, because more and more functional modules are disposed in terminal devices, even if the terminal device is in the standby mode, some functional modules of the terminal device are still running, and for the terminal device, power consumption is still high.

For example, the terminal device is a wearable device, for example, a smart band or a smart watch (that is used as an example below). The terminal device is in the standby mode, and some cores run by the processor of the terminal device stop running.

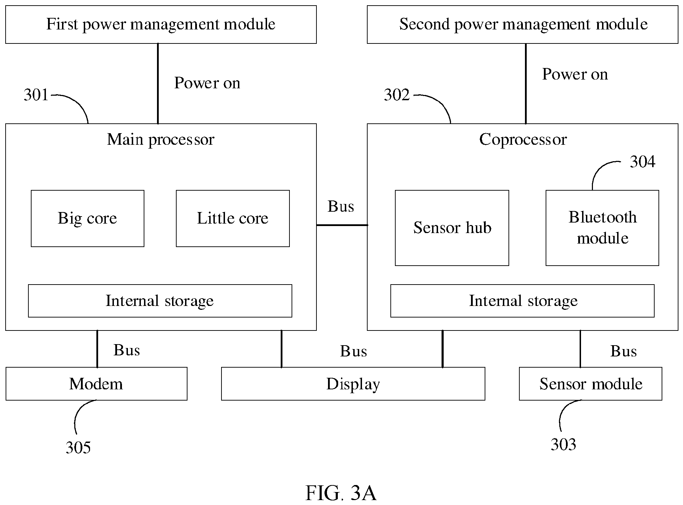

As an example, FIG. 3A is a diagram of a structure of a smart watch according to an embodiment of this application. As shown in FIG. 3A, the smart watch may include a main processor 301 and a coprocessor 302. The main processor 301 may be considered as a processor (or a chip) having a relatively strong processing capability, relatively good performance, and relatively high power consumption. The main processor 301 may include one or more processing units, or it may be considered that the main processor 301 includes a plurality of cores (in FIG. 3A, an example in which the main processor 301 includes a big core and a little core is used). For example, the main processor 301 may include an application processor (application processor, AP), a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The main processor 301 may be a nerve center and a command center of the smart watch 100. The plurality of cores of the main processor 301 may run based on one operating system. The main processor 301 may generate an operation control signal based on an instruction operation code and a time sequence signal, to complete control of instruction fetching and instruction execution. In some other embodiments, a memory (that may also be considered as an internal storage) may be further disposed in the main processor 301 and configured to store instructions and data. In some embodiments, the memory in the main processor 301 is a cache. The memory may store instructions or data that have/has just been used or are/is cyclically used by the main processor 301. If the main processor 301 needs to use the instructions or the data again, the instructions or the data may be directly invoked from the memory, thereby avoiding repeated access, reducing a waiting time of the main processor 301, and improving system efficiency. The main processor 301 may run software code/a software module in the energy-saving method according to some embodiments of this application, to stop supplying power to some functional modules, thereby achieving energy saving.

The coprocessor 302 is a processor (or a chip) having a relatively weak processing capability, relatively poor performance, and relatively low power consumption. The coprocessor 302 may include one or more processing units, or the coprocessor 302 may include one or more cores. For example, the coprocessor 302 may include a low-power processing module or processing circuit, for example, a low-power AP, sensor hub (Sensor hub) (that is used as an example in FIG. 3A), or micro-programmed control unit (micro-programmed control unit, MCU). The plurality of cores of the coprocessor 302 run based on an operating system different from that on the main processor 301, or the coprocessor 302 may even run based on no operating system. Similar to that for the main processor 301, a memory (which may also be considered as an internal storage) may also be disposed in the coprocessor 302 and configured to store instructions and data. In some embodiments, the memory in the coprocessor 302 is a cache. The memory may store instructions or data that have/has just been used or are/is cyclically used by the main processor 301. If the coprocessor 302 needs to use the instructions or the data again, the instructions or the data may be directly invoked from the memory, thereby avoiding repeated access, reducing a waiting time of the coprocessor 302, and improving system efficiency. The coprocessor 302 may run the software code/the software module in the energy-saving method according to some embodiments of this application, and may trigger a power cut to some functional modules, thereby achieving energy saving.

The smart watch further includes a sensor module 303. The sensor module 303 may include various types of sensors configured to detect a sleep status of a user, for example, a photoelectric sensor, for example, a photoplethysmography (photoplethysmography, PPG) sensor or an electrocardiogram (electrocardiogram, ECG) sensor, may further include another highly sensitive bioelectric sensor, for example, a bioimpedance sensor, a heart rate sensor, an electromyography sensor, or an electroencephalogram sensor, and may further include a sound sensor, a motion sensor (that may also be referred to as an inertia sensor, for example, a gyroscope, an accelerometer, or a velocity sensor), a position sensor (for example, a global positioning system (global positioning system, GPS)), and the like. The PPG sensor, the ECG sensor, the heart rate sensor, the electromyography sensor, the electroencephalogram sensor, and the like may obtain bioelectric signals, for example, an electrocardiosignal, an electromyographic signal, and an electroencephalogram signal, from a top layer of human skin, and may determine a sleep parameter based on these bioelectric signals, to determine the sleep status of the user. It should be understood that, in actual application, the smart watch may further include more or fewer sensors, or replace the sensors listed above with other sensors having same or similar functions, for example, may further include an audio sensor (for example, a microphone), an optical or visual sensor (for example, a camera, a visible light sensor, or an invisible light sensor), an optical proximity sensor, a touch sensor, a pressure sensor, a mechanical device (for example, a crown, a switch, a button, or a key), and a vibration sensor. This is not limited in this embodiment of this application. The sensor module 303 may obtain sleep data indicating, for example, the sleep status of the user, and transmit the obtained data to the coprocessor 302 connected to the sensor module 303. The coprocessor 302 may process the data from the sensor module 303, perform data fusion, and control, for example, a second power management module to perform a corresponding operation according to a processing result.

The smart watch may have a communication function, or may not have a communication function. For example, the smart watch may send, by using a Bluetooth module 304, the sleep data to another device, for example, a mobile phone, that is connected to the smart watch, so that the another device estimates the sleep status of the user based on the sleep data. In some embodiments, the smart watch may further include a wireless communication module and/or a mobile communication module, and one or more antennas. The smart watch may implement a communication function by using the one or more antennas and the wireless communication module or the mobile communication module. The mobile communication module (also referred to as a baseband module) may provide a wireless communication solution that is applied to the smart watch and that includes 2G/3G/3G/5G and the like. For example, a modem 305 may also be considered as a mobile communication module. The modem 305 may be connected to the main processor 301. The wireless communication module may provide a wireless communication solution that is applied to the smart watch and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The one or more antennas may be configured to transmit and receive an electromagnetic wave signal. BT can be Bluetooth Low Energy (Bluetooth Low Energy, BLE). In some embodiments, a Bluetooth connection includes a Bluetooth connection according to a Bluetooth protocol 3.x, for example, 4.2, or may include a Bluetooth connection according to a Bluetooth protocol 5.x, for example, 5.0. In FIG. 3A, an example in which the wireless communication module is the BT module 304 is used.

The BT module 304 may transmit data to the main processor 301 (or the coprocessor 302) by using a universal asynchronous receiver transmitter (universal asynchronous receiver transmitter, UART), and implement a Bluetooth function according to an instruction of the main processor 301 (or the coprocessor 302). A UART interface is a universal serial data bus used for asynchronous communication. The bus may be a bidirectional communications bus that converts data, that is to be transmitted, between serial communication and parallel communication. The wireless communication module may further transmit data to the sensor module 303 by using an inter-integrated circuit (inter-integrated circuit, I2C) or an improved inter-integrated circuit (improved inter-integrated circuit, I3C), and implement a Bluetooth function, for example, Bluetooth advertising (Advertising, ADV), Bluetooth scanning (Scanning), link establishment, and data synchronization according to an instruction of the main processor 301 (or the coprocessor 302). An I2C interface is a bidirectional synchronous serial bus that includes one serial data line (serial data line, SDA) and one serial clock line (serial clock line, SCL). The I3C is an improvement of the I2C, and is compatible with an I2C protocol, combining advantages of both I2C (two-wire and simple) and SPI (low-power and high-speed).

The mobile communication module may be coupled to one or more antennas. For example, the mobile communication module may receive an electromagnetic wave through the one or more antennas, perform processing, for example, filtering or amplification, on the received electromagnetic wave to obtain an electrical signal, and transmit the electrical signal to the main processor 301 for processing (for example, the main processor 301 determines whether to provide a corresponding output in response to the electrical signal). The mobile communication module may further amplify the signal processed by the main processor 301, and convert the signal into an electromagnetic wave for radiation through the one or more antennas. In some other embodiments, the wireless communication module may also be coupled to the one or more antennas. For example, the wireless communication module may receive an electromagnetic wave through the one or more antennas, perform processing, for example, filtering and amplification, on the received electromagnetic wave, and transmit the electromagnetic wave to the main processor 301 for processing. The wireless communication module may further amplify a signal processed by the main processor 301, and convert the signal into an electromagnetic wave for radiation through the one or more antennas.

It should be noted that FIG. 3A shows only some functional components of the smart watch, and does not constitute a specific limitation on the smart watch. For example, the smart watch may include more or fewer components than those shown in FIG. 3A, or some components may be combined, or some components may be split, or different component arrangements may be used.

For example, the smart watch may further include a memory, and the memory may be configured to store computer-executable program code. The executable program code includes instructions. The main processor 301 runs the instructions stored in the memory, to implement various function applications and data processing on the smart watch. The memory may include a program storage area and a data storage area. The program storage area may store an operating system, software code of at least one application (for example, a heart rate detection application), and the like. The data storage area may store data (for example, sleep data) generated during use of the smart watch, and the like. In addition, the memory may include a high-speed random-access memory, and may further include a non-volatile memory, for example, at least one magnetic disk storage device, a flash storage device, or a universal flash storage (universal flash storage, UFS). This is not limited in this embodiment of this application.

For example, the electronic device may include a display (or a display screen) (that is used as an example in FIG. 3A), or may not include a display. For example, if the electronic device is a band, the electronic device may include a display or may not include a display; or if the electronic device is a smart watch, the electronic device may include a display screen. The display is connected to the main processor 301 and the coprocessor 302 through a bus. When a first power management module cuts power to the main processor 301, the coprocessor 302 controls a display function of the display. When the coprocessor 302 is in a power-off state, the main processor 301 controls the display function of the display. The display screen may be configured to display sleep information, a display interface for another application, or the like. The display screen includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, a touch sensor may be disposed in the display screen to provide a touchscreen. This is not limited in this embodiment of this application. The touch sensor is configured to detect a touch operation performed on or near the touch sensor. The touch sensor may transfer a detected touch operation to the main processor 301 to determine a type of the touch event. A visual output related to the touch operation may be provided by using the display.

In this embodiment of this application, an implementation of encapsulation of the coprocessor 302 and the main processor 301 is not limited, and an implementation of encapsulation of the Bluetooth module 304 and the coprocessor 302 is not limited either. That is, the coprocessor 302 may be independent of the main processor 301, or may be integrated with the main processor 301. The Bluetooth module 304 may be independent of the coprocessor 302, or may be integrated with the coprocessor 302.

For example, FIG. 3A also shows that the coprocessor 302 is independent of the main processor 301, and the Bluetooth module 304 is integrated with the coprocessor 302. In this case, the main processor 301 and the coprocessor 302 may be powered separately. For example, the main processor 301 may be powered by the first power management module, and the coprocessor 302 may be powered by the second power management module. To be specific, the first power management module is configured to manage power supply to, for example, a big core and a little core of the main processor 301, and the second power management module is configured to manage power supply to the sensor hub and the Bluetooth module 304 in the coprocessor 302. The first power management module may be a power management integrated circuit (power management integrated circuit, PMIC). The second power management module may be a low dropout regulator (low dropout regulator, LDO), or may be a switching regulator (also referred to as a buck (Buck)). Because the main processor 301 and the coprocessor 302 are powered separately, power-off of the main processor 301 does not impact running of the coprocessor 302. Similarly, power-off of the coprocessor 302 does not impact running of the main processor 301. Therefore, when there is no need for the main processor 301 to work, power supply to the main processor 301 may be cut, that is, all cores of the main processor 301 stop working, to reduce energy consumption to a maximum degree.

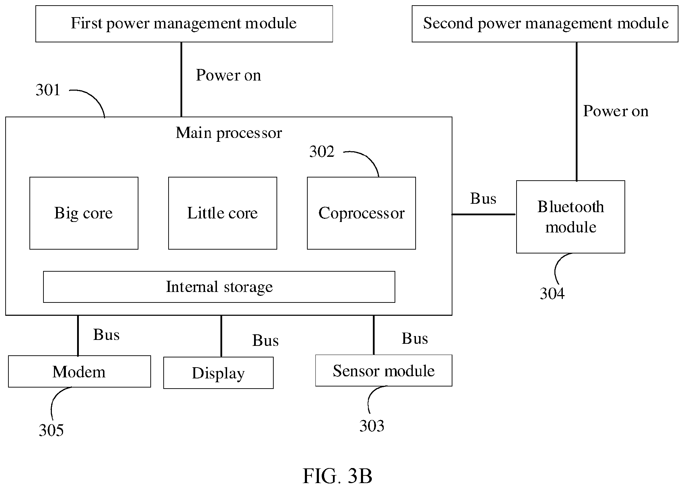

For example, FIG. 3B shows that the coprocessor 302 is integrated with the main processor 301, and the Bluetooth module 304 is independent of the coprocessor 302. In this case, the Bluetooth module 304 may be connected to the main processor 301 through a bus, and the sensor module 303 may be connected to the main processor 301 through a bus. The main processor 301 and the Bluetooth module 304 may be powered separately. To be specific, the first power management module is connected to the main processor 301, and is configured to manage power supply to the big core and the little core of the main processor 301 and the coprocessor 302. The second power management module is connected to the Bluetooth module 304, and is configured to manage power supply to the Bluetooth module 304.

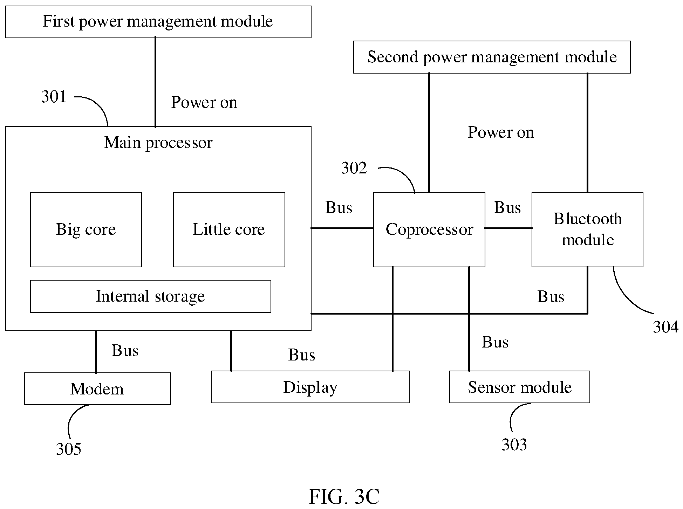

For example, FIG. 3C shows that the coprocessor 302 is independent of the main processor 301, and the Bluetooth module 304 is independent of the coprocessor 302. In this case, the Bluetooth module 304 may be connected to the coprocessor 302 and the main processor 301 through buses, and the coprocessor 302 is connected to the main processor 301 through a bus. The main processor 301 and the coprocessor 302 may be powered separately. Power supply to the coprocessor 302 and the Bluetooth module 304 may be managed by a same power management module. For example, the main processor 301 may be powered by the first power management module, and the coprocessor 302 and the Bluetooth module 304 may be powered by the second power management module. To be specific, the first power management module is configured to manage power supply to, for example, a big core and a little core of the main processor 301, and the second power management module is configured to manage power supply to the Bluetooth module 304 in the coprocessor 302.

In the electronic devices shown in FIG. 3A to FIG. 3C, the main processor 301 is connected to the coprocessor 302. In this way, the main processor 301 and the coprocessor 302 may send an instruction or data to each other, to implement a corresponding function. For example, when determining that a user is in sleep, the coprocessor 302 may notify the main processor 301, that is, send a first signal to the main processor 301, where the first signal is used to indicate that the user is in sleep. After receiving the first signal, the main processor 301 may control power supply to the main processor 301 to be cut (that is, control the main processor 301 to be powered off), and the coprocessor 301 is controlled to control power supply to the display, the Bluetooth module 303, and the like. When the coprocessor 302 determines that the user wakes up from sleep, that is, the user goes from sleep to being awake, the coprocessor 302 may control the main processor 301 to be powered on again. For example, the coprocessor may control the main processor to be powered on again by controlling the first power management module.

For example, the terminal device is a non-wearable device, for example, a tablet or a mobile phone (that is used as an example below).

Similar to the smart watch, the mobile phone also includes a main processor, a coprocessor, a Bluetooth module, a sensor module, and a modem. A structure shown in any one of FIG. 3A to FIG. 3C is also applicable to the mobile phone. Details are not described herein again.

It should be noted that the mobile phone may further include fewer or more functional components than the smart watch. For example, the mobile phone may include more or fewer components than those shown in FIG. 3A to FIG. 3C, or some components may be combined, or some components may be split, or different component arrangements may be used. For another example, the mobile phone further includes a subscriber identity module (subscriber identity module, SIM) card interface, for connecting to a SIM card, to implement a function of calling. The SIM card may be inserted into the SIM card interface or plugged from the SIM card interface, to implement contact with or separation from the mobile phone.

To further reduce energy consumption of the terminal device, an embodiment of this application provides an energy-saving method. According to the method, if it is determined that a user is in a condition in which the terminal device does not need to be used, for example, the user is in sleep, the user is on an airplane, the terminal device is in a shielded scenario, or the electronic device is in a manner mode, a do-not-disturb mode, or a conference mode, more functional modules disposed in the terminal device may be turned off. Clearly, if the terminal device switches from a state in which there is no need to be used by the user to a state in which there is a possibility to be used by the user, for example, when the user wakes up from sleep, or the terminal device switches from the manner mode to an incoming call notification mode, some functional modules that have been turned off in the terminal device may be woken up. In this way, usage by the user is not affected, and the purpose of saving energy to a maximum degree can be achieved.

It should be noted that this embodiment of this application is aimed to reduce energy consumption of the electronic device to a maximum degree. When the user is in a condition in which the electronic device is not used, in addition to some turned-off functional modules of the electronic device, some running applications such as a music APP or a video APP may be further turned off.

The energy-saving method according to this embodiment of this application may be applied to a plurality of terminals using one number, that is, a plurality of terminal devices that share a same number (for example, an MSISDN, that is, a phone number). A profile corresponding to a same number may be different on different terminal devices. For example, an IMSI, a key, or other information may be different. Essentially, profiles corresponding to a same number on different terminal devices holds subscription to a same carrier service. For example, carrier services such as data traffic and calling service minutes are the same and are shared among terminal devices.

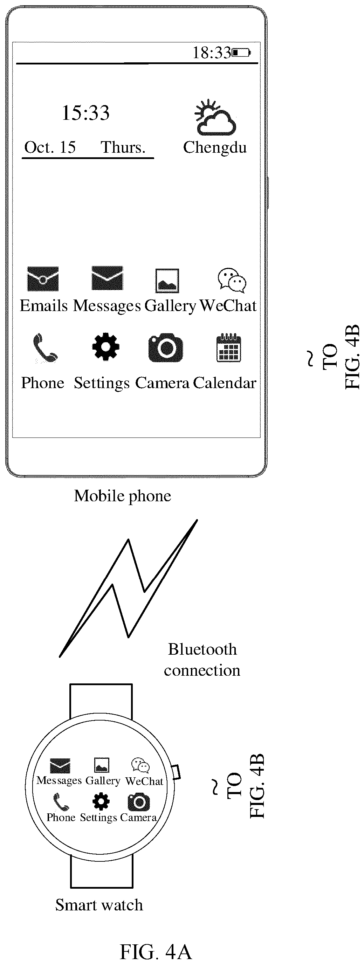

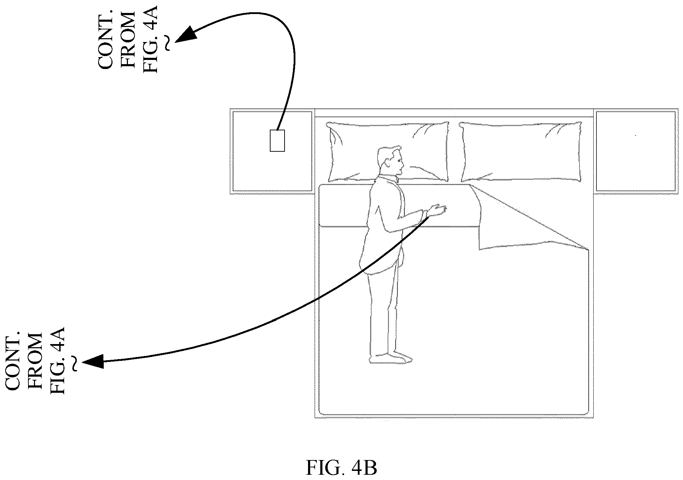

FIG. 4A and FIG. 4B show an application scenario according to an embodiment of this application. In this scenario, the mobile phone and the smart watch are terminals using one number, and the smart watch starts a one-number-multi-terminal service via the mobile phone. For example, a scenario in which a user does not need to use the terminal device is a scenario in which the user is in sleep.

Usually, when the user is awake, as the user uses various functions of the smart watch, various functional modules of the smart watch are in a normal working state, that is, the functional modules are all in a power-on state. For example, a processor (for example, an application processor), a modem module, a coprocessor, and a Bluetooth module that are included in the smart watch are all in a normal working state. The Bluetooth module of the smart watch may control the smart watch to maintain a Bluetooth connection to the mobile phone. The processor of the smart watch may control the display screen to display some menu information and incoming call notification information, for example, an incoming call number.

However, when the user is in sleep, the user usually does not use the smart watch. To reduce energy consumption of the smart watch, the smart watch may be switched to the standby mode (also referred to as a sleep mode). To be specific, the functional modules included in the smart watch are still powered on, and only some functional modules are switched to a low-power mode. In other words, the processor of the smart watch is still in the power-on state, and only some cores running on the processor stop working. For example, wireless fidelity (wireless fidelity, Wi-Fi)/global positioning system (global positioning system, GPS) scanning may be stopped to reduce wake-up; or some modules turn to the low-power mode, where for example, the Bluetooth (Bluetooth, BT) module, a Wi-Fi module, and the modem (Modem) module each send a keep-alive frame periodically. However, because there are still a relatively large quantity of functional modules disposed in the smart watch that are in the power-on state, especially as more and more functional modules are disposed in the smart watch, power consumption of the smart watch is still high. Similarly, for the mobile phone, like that for the smart watch, even if the mobile phone is switched to the standby mode, because more and more functional modules are disposed in the mobile phone, power consumption of the mobile phone is still high.

To further reduce energy consumption of, for example, the smart watch, in this embodiment of this application, if the smart watch determines that the user is in sleep, the smart watch may turn off one or more included functional modules. Turning off the one or more functional modules included in the smart watch may also be considered as stopping supplying power to the one or more functional modules, or performing power consumption reduction on the one or more functional modules. For example, when the smart watch detects that the user is in sleep, the smart watch may turn off functions of, for example, the processor 301 and the modem module 305, that is, cur power to the processor 301 and the modem module 305. Compared with turning off some cores running on the processor 301, in this embodiment of this application, cutting power to the processor 301 and the modem module 305, that is, stopping running of all cores of the processor 301 and powering off the modem module 305, can further reduce energy consumption of the smart watch to a maximum degree. For the mobile phone, when detecting that the user is in sleep, the smart watch may notify the mobile phone, and the mobile phone determines that the user is in sleep, and may also turn off the functions of the processor 301, the modem module 305, and the like, that is, cutting power to the processor 301 and the modem module 305. Compared with turning off some cores running on the processor 301, in this embodiment of this application, cutting power to the processor 301 and the modem module 305, that is, stopping running of all cores of the processor 301 and powering off the modem module 305, can further reduce energy consumption of the mobile phone to a maximum degree.

For ease of understanding, with reference to the accompanying drawings, the energy-saving method for a terminal device according to this application is described in detail below. It should be understood that the terminal device has a capability for one-number-multi-terminal. The terminal device described below includes a main processor and a coprocessor, and the main processor and the coprocessor are powered separately. In this way, power supply to the main processor may be stopped when energy saving is required. Because the coprocessor may still be configured to generate an operation control signal based on an instruction operation code and a time sequence signal, to complete control of instruction fetching and instruction execution, for implementing a part of corresponding functions, usage by the user is not affected, and the purpose of saving energy to a maximum degree can be achieved.

A process in which an electronic device implements an energy-saving method according to an embodiment of this application is described below with reference to the structures shown in FIG. 3A to FIG. 3C.

### Embodiment 1

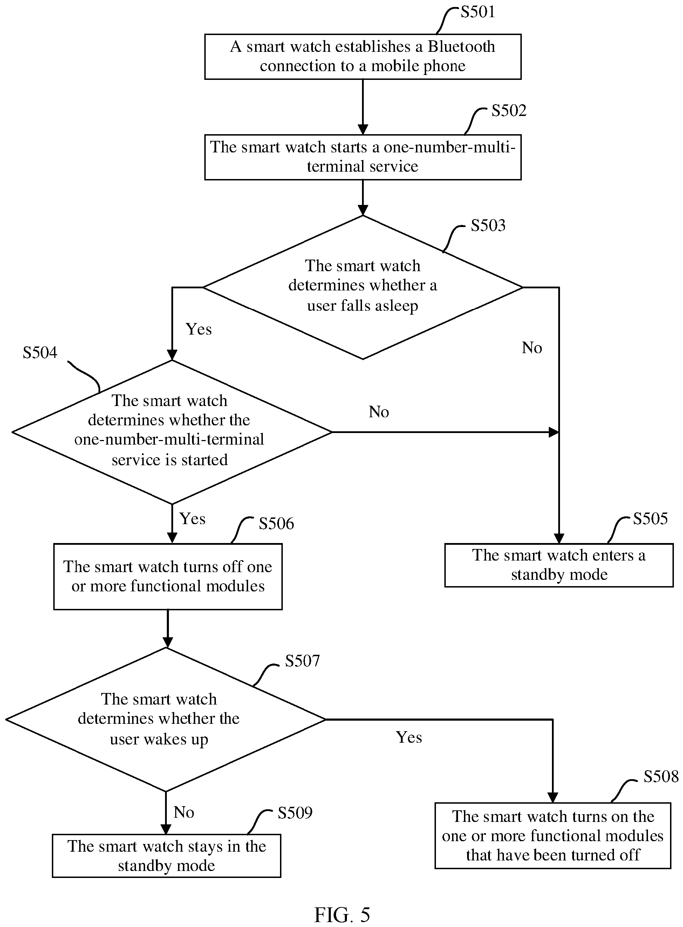

FIG. 5 is a schematic flowchart of a first energy-saving method according to an embodiment of this application. The method may be implemented by a terminal, using one number with another terminal, shown in any one of FIG. 3A to FIG. 3C, for example, the smart watch. When determining that a user is in sleep, the smart watch may turn off functions of the main processor 301, the modem 305, and the like, that is, cut power to the main processor 301 and the modem 305. Compared with turning off some cores running on the main processor 301, in this embodiment of this application, cutting power to the main processor 301 and the modem 305, that is, stopping running of all cores of the main processor 301 and powering off the modem 305, can clearly further reduce power consumption to a maximum degree. As shown in FIG. 5, a procedure of the method includes the following steps.

S501: The smart watch establishes a Bluetooth communication connection to the mobile phone via Bluetooth.

A specific implementation of S501 is the same as a specific implementation of S201. For details, refer to content related to S201. Details are not described herein again.

S502: The smart watch starts a one-number-multi-terminal service via the mobile phone.

A specific implementation of S502 is the same as processes in S202 to S209 described above. For details, refer to content related to S202 to S209. Details are not described herein again.

S503: The smart watch detects whether the user falls asleep.

The smart watch may include a sensor configured to detect a physiological signal from a human body, for example, a PPG sensor, an ECG sensor, a bioelectric sensor, or an electromyography sensor. The sensor configured to detect a physiological signal from a human body may be disposed on a side that is in contact with the skin of the user when the user is wearing the smart watch 100. After the user wears the smart watch, the sensor for detecting a physiological signal from a human body is in contact with the user's body. Therefore, a physiological signal from a human body may be detected by wearing the smart watch on a wrist. For example, the sensor configured to detect a physiological signal from a human body may detect a PPG signal, an electrocardiosignal, a vibration signal, a bioimpedance signal, or the like. The sensor configured to detect a physiological signal from a human body transmits the detected physiological signal from the human body to the coprocessor 302, and the coprocessor 302 may obtain physiological data of the user based on the received physiological signal from the human body, to determine, based on the physiological data, whether the user falls asleep or wakes up. Alternatively, the coprocessor 302 may send the physiological data of the user obtained based on the received physiological signal from the human body to the main processor 301, and the main processor 301 obtains the physiological data of the user, to determine, based on the physiological data, whether the user falls asleep or wakes up.

For example, the physiological data of the user is pulse data, for example, PPG data. In this case, the sensor configured to detect a physiological signal from a human body is, for example, a photoelectric sensor, and the photoelectric sensor may obtain pulse data of the user. In some embodiments, the photoelectric sensor is the PPG sensor. When the heart of the user contracts, a blood volume of blood vessels increases, and light absorption increases accordingly. Correspondingly, a light intensity detected by the PPG sensor is lower. When the heart of the user relaxes, the blood volume of the blood vessels decreases, and a light intensity detected by the PPG sensor is higher. Based on this, as the heart of the user beats, the PPG sensor may detect light intensities with pulsatile changes. Further, the PPG sensor may convert a light intensity change signal into a digital electrical signal. It may be considered that the digital electrical signal is a PPG signal or PPG data.

It should be noted that obtaining of the pulse data by the PPG sensor is merely an example for description and constitutes no limitation on the technical solutions in the embodiments of this application. Any sensor that can be used to detect whether the user falls asleep may be used. For example, in some other embodiments, the smart watch 100 may alternatively obtain the pulse data by using the ECG sensor. Details are not described in this embodiment of this application again.

In some embodiments, the smart watch may obtain the physiological signal of the user at intervals of a first time length, to accurately determine whether the user falls asleep or wakes up. A probability of an error is reduced as far as possible.

In some other embodiments, according to sleep habits of the user, the physiological signal of the user may be set to being obtained, within one or more time periods, at intervals of a second time length, that is, the physiological data of the user within a specified time period is obtained. In this way, frequent obtaining of the physiological signal of the user may be avoided, to reduce energy consumption of the smart watch as far as possible. The second time length may be the same as or different from the first time length. This is not limited in this embodiment of this application. The one or more time periods can be any time period in one day. For example, the user usually takes a noon break, that is, is in sleep for a period of time, a specified time period may be from 11:00 to 13:00 in one day. For another example, the user is also in sleep at night, and a specified time period may further include 22:00 in a previous day to 7:00 in a next day.

Further, the smartphone may be set to obtain the physiological signal of the user within one or more time lengths in the one or more time periods, thereby further reducing energy consumption of the smart watch. For example, the smartphone may be set to obtain the physiological signal of the user within a third time length and a fourth time length from 11:00 to 13:00 in one day. The third time length may start from 11:00, and determining of whether the user falls asleep begins. The fourth time length may start from 13:00, and determining of whether the user wakes up begins. The third time length may be, for example, 10 minutes, and the fourth time length may also be, for example, 10 minutes. It should be noted that a length of the third time length is not limited in this embodiment of this application. For example, the third time length may be 15 minutes, and the fourth time length may be 20 minutes.

In addition, the smart watch may alternatively obtain the physiological signal of the user aperiodically in each time period. In other words, in each time period, physiological signals of the user may be obtained for a plurality of times, and intervals between two successive times of obtaining the physiological signals of the user may be the same or may be different.

The smart watch 100 may determine, based on the physiological data of the user, that the user falls asleep or wakes up. For example, the physiological data of the user is the pulse data. If the user falls asleep, when the heart of the user relaxes, a blood volume of blood vessels decreases, and a light intensity detected by the PPG sensor is higher. If the user wakes up, when the heart of the user contracts, the blood volume of the blood vessels increases, light absorption increases accordingly, and a light intensity detected by the PPG sensor is lower. Therefore, the light intensity detected by the PPG sensor may be used to determine that the user falls sleep or wakes up in a period of time. If it is determined that the user falls asleep, S504 may be performed. On the contrary, if the smart watch 100 determines that the user has not fallen asleep, S505 may be performed.

S504: The smart watch determines whether the one-number-multi-terminal service is started.

It should be understood that, if the smart watch has not started the one-number-multi-terminal service, that is, the modem 305 of the smart watch may be in an off-working state, it may also be considered that the modem 305 does not consume power of the smart watch. In this case, when the smart watch determines that the user is in sleep, a conventional power-saving mode of a smart watch may be used, that is, S505 is performed. That is, the smart watch enters a standby mode.

However, that the smart watch has started the one-number-multi-terminal service means that the modem 305 of the smart watch may consume power of the smart watch. Therefore, if the smart watch has started the one-number-multi-terminal service, and the user has fallen asleep, power supply to a functional module included in the smart watch, for example, the modem 305, may be cut off, that is, S506 is performed, to reduce power consumption of the smart watch as far as possible.

It should be understood that after the smart watch starts the one-number-multi-terminal service, both the mobile phone and the smart watch store information indicating that the smart watch has started the one-number-multi-terminal service. The smart watch may query whether there is the information. If the information does not exist, the smart watch determines that the one-number-multi-terminal service has not been started. On the contrary, if the information exists, the smart watch may determine that the one-number-multi-terminal service has been started.

S506: The smart watch turns off the one or more included functional modules.

It should be understood that, when the user is awake, as the user uses various functions of the smart watch, the various functional modules of the smart watch are in a normal working state, that is, the functional modules are all in a power-on state. For example, the main processor 301 (for example, including an application processor), the modem 305, the coprocessor 302, the Bluetooth module 304, the sensor module 303, and the like that are included in the smart watch are all in a normal working state. The Bluetooth module 304 of the smart watch may control the smart watch to maintain a Bluetooth connection to the mobile phone. The main processor 301 of the smart watch may control the display screen to display some menu information, incoming call notification information, and the like.

However, when the user is in sleep, the user usually does not use the smart watch. To reduce energy consumption of the smart watch, the smart watch may be switched to the standby mode (also referred to as a sleep mode). To be specific, the functional modules included in the smart watch are still powered on, and only some functional modules are switched to a low-power mode. In other words, the main processor 301 of the smart watch is still in the power-on state, and only some cores running on the main processor 301 stop working. For example, Wi-Fi/GPS scanning may be stopped to reduce wake-up; or some modules turn to the low-power mode, where for example, the BT module, the Wi-Fi module, and the modem module each send a keep-alive frame periodically.

To further reduce energy consumption of the smart watch, in this embodiment of this application, if the smart watch determines that the user is in sleep, and the smart watch has started the one-number-multi-terminal service, the smart watch may turn off the one or more included functional modules. Turning off the one or more functional modules included in the smart watch may also be considered as stopping supplying power to the one or more functional modules, or performing power consumption reduction on the one or more functional modules. For example, when the smart watch detects that the user falls asleep, the smart watch may turn off the functions of the main processor 301, the modem 305, and the like, that is, perform a power-off operation on the main processor 301 and the modem 305, that is, cut power to the main processor 301 and the modem 305. Compared with turning off some cores running on the main processor 301, in this embodiment of this application, cutting power to the main processor 301 and the modem 305, that is, stopping running of all cores of the main processor 301 and powering off the modem 305, can clearly further reduce power consumption to a maximum degree. It should be understood that, the power-off operation performed on the main processor 301 and the modem 305 may be that the first power management module cuts power to the main processor 301 and the modem 305, and keeps powering on the Bluetooth module 304. For example, as shown in FIG. 3A and FIG. 3C, the first power management module cuts power to the main processor 301 and the modem 305, and keeps powering on the Bluetooth module 304. The coprocessor 302 may control communication between the Bluetooth module 304 and the smart watch. When the modem 305 of the mobile phone is on and there is an incoming call, because the smart watch and the mobile phone may communicate with each other by using the Bluetooth module 304, the smart watch may also implement a function of calling based on the Bluetooth communication with the mobile phone. As shown in FIG. 3B, the first power management module cuts power to the main processor 301, the modem 305, and the coprocessor 302, and keeps powering on the Bluetooth module 304. In this case, the Bluetooth module 304 may perform a wake-up task, a task, for example, for wake-up with a set interrupt task; for another example, for wake-up by receiving information that is encapsulated according to a Bluetooth protocol and sent by another device; or for waking up the main processor 301 and the modem 305 in response to a Bluetooth wake-up message triggered by the mobile phone.

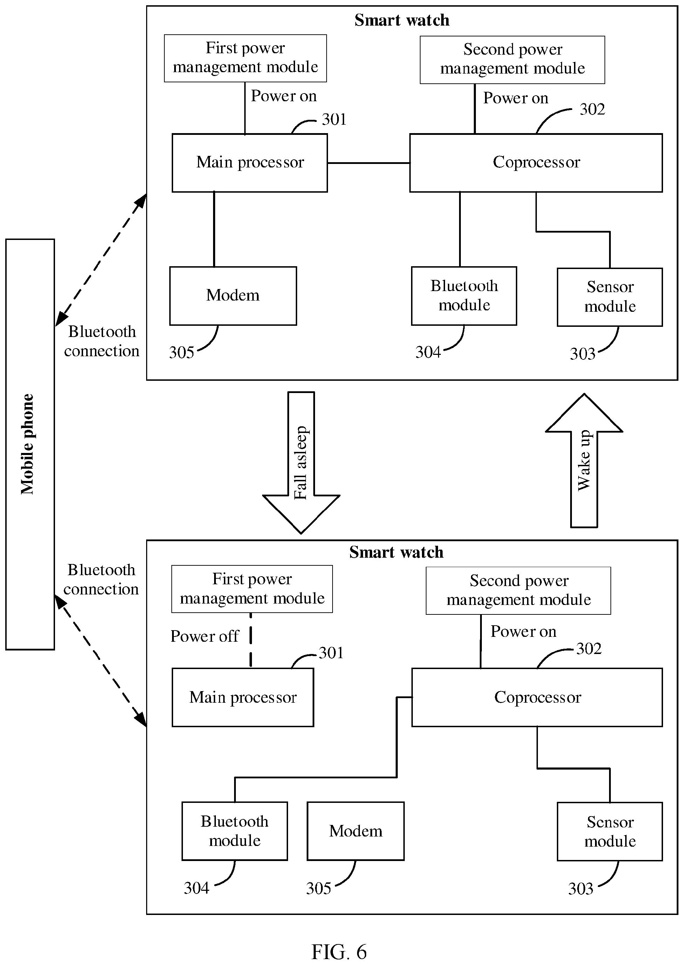

FIG. 6 is a block diagram of a principle of saving energy on the smart watch. In FIG. 6, turning off the functions of the main processor 301 and the modem 305 is used as an example. It should be understood that FIG. 6 is merely an example. In a possible implementation, a function of another possible module may be further turned off. The user falls asleep, and the smart watch turns off the functions of the main processor 301 and the modem 305. In this case, the coprocessor 302 may control a display function of the display screen, to ensure that the display screen can display information, for example, time, so that the user can check on the time when needed. The coprocessor 302 may further control the smart watch to maintain the Bluetooth connection to the mobile phone. Although the smart watch turns off the modem 305, the coprocessor 302 may control the smart watch to maintain the Bluetooth connection to the mobile phone, and the modem 305 of the mobile phone is on a network. Therefore, it can be ensured that an incoming call, an SMS message, and the like for the user are not affected, that is, usage by the user is not affected.

In this embodiment of this application, the user falls asleep, and the smart watch turns off the functions of the main processor 301 and the modem 305 that are included. Compared with that in switching the smart watch to the standby mode (also referred to as a sleep mode), power consumption is clearly lower because power supply for the functions of the main processor 301 and the modem 305 is cut.

S507: The smart watch determines whether the user wakes up.

S508: The smart watch determines that the user wakes up, and turns on the one or more functional modules turned off by the smart watch.

S509: The smart watch determines that the user has not woken up, and stays in the standby mode.

It should be understood that when the user wakes up, to not affect usage of the smart watch by the user, the one or more functional modules that have been turned off need to be turned on. That is, power supply to the one or more functional modules is restored. Still refer to FIG. 6. The user wakes up, and the smart watch may restore power to the main processor 301 and the modem 305. For example, when the coprocessor 302 determines that the user using the mobile phone wakes up, the coprocessor 302 may control the first power management module to perform a power-on operation on the main processor 301 and the modem 305. In this case, the coprocessor 302 may communicate with the main processor 301, and the main processor 301 may control a connection and a disconnection between the Bluetooth module 304 of the smart watch and the mobile phone. For example, because the modem 305 of the smart watch is on, and the modem 305 has a capability for the one-number-multi-terminal service, and can implement the function of calling or SMS with another user without assistance of the mobile phone, the main processor 301 may control the connection between the Bluetooth module 304 of the smart watch and the mobile phone, to reduce energy consumption of the smart watch as far as possible. Subsequently, the user may control, based on an actual condition, the Bluetooth module 304 of the smart watch to establish a connection to the mobile phone. For example, before falling asleep, the user may operate the smart watch and the mobile phone, so that Bluetooth pairing is implemented between the smart watch and the mobile phone, and whether the user falls asleep is determined again by using the smart watch.

It should be noted that, when the smart watch determines that the user wakes up, in addition to restoring power to the main processor 301 and the modem 305, the smart watch may enter the standby mode again, and clearly, may alternatively exit the standby mode.

It should be noted that, in the procedure shown in FIG. 5, an example in which the smart watch determines whether the user falls asleep to determine whether the smart watch satisfies a condition for power saving is used in S503. S503 may also be considered as determining whether the smart watch satisfies the condition for power saving. If the user falls asleep, the smart watch satisfies the condition for power saving. Correspondingly, S503 may also be considered as determining whether the smart watch does not satisfy the condition for power saving. If the user wakes up, the smart watch does not satisfy the condition for power saving.

In FIG. 5, the condition for power saving being that the user falls asleep is merely used as an example. In some embodiments, the condition for power saving may alternatively be another possible condition. For example, the condition for power saving may be one or more of the following conditions: a user using the mobile phone and the smart watch falls asleep; the smart watch or the mobile phone is in a profile mode, a manner mode, a do-not-disturb mode, or a conference mode; the smart watch or the mobile phone is in a power-saving mode; scenario information of the smart watch or the mobile phone satisfies a preset condition, where the scenario information may include information about a location of a scenario that indicates a location of a scenario for the smart watch or the mobile phone, for example, a meeting room or a cinema, and the scenario information may include information about a time for power saving that indicates a time period for power saving; a current time is within a preset power-saving time period for the smart watch or the mobile phone; and power-saving instruction information from another device is received, that is, an instruction from the another device for instructing the smart watch or the mobile phone to perform a power-off operation is received. When determining whether the condition for power saving is satisfied, the smart watch may further recognize a current mode of the smart watch. A specific mode recognition method may be an existing mode recognition method. For example, the smart watch may recognize the manner mode based on a volume parameter of a speaker of the smart watch. For another example, the smart watch may recognize the conference mode by using a positioning system on the smart watch and determining whether a position of the smart watch is in a meeting room or the like. Clearly, the smart watch may alternatively obtain, from the mobile phone, configuration information that indicates whether the condition for power saving is satisfied. For example, the configuration information may include the foregoing scenario information, preset time for power saving on the mobile phone, current mode of the mobile phone, and the like, to fairly accurately determine whether the smart watch satisfies the condition for power saving.

### Embodiment 2

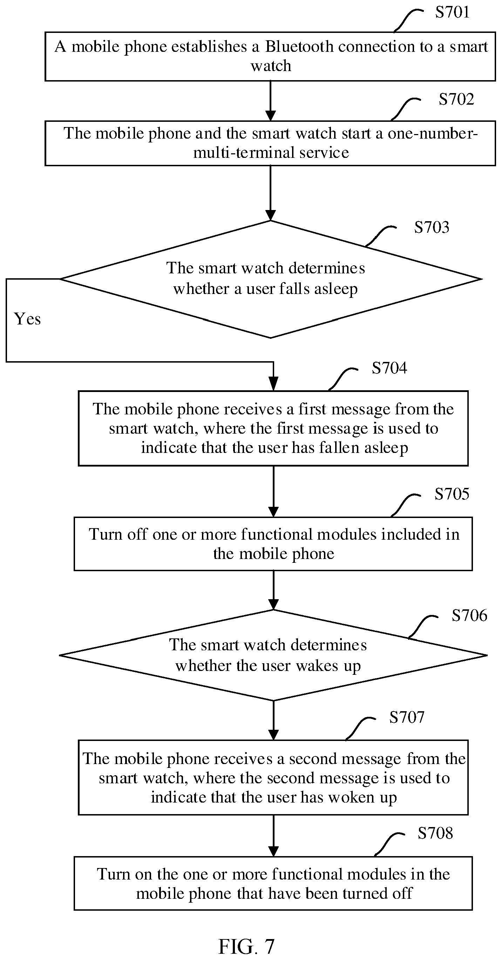

FIG. 7 is a schematic flowchart of a second energy-saving method according to an embodiment of this application. The method may be implemented by a terminal, using one number with another terminal, shown in any one of FIG. 3A to FIG. 3C, for example, the mobile phone. The mobile phone determines that the user falls asleep, and may stop power supply to one or more functional modules. For example, the mobile phone may cut power to the main processor 301 and the modem 305. Compared with turning off some cores running on the main processor 301, in this embodiment of this application, cutting power to the main processor 301 and the modem 305, that is, stopping running of all cores of the main processor 301 and powering off the modem 305, can further reduce power consumption to a maximum degree. As shown in FIG. 7, a procedure of the method includes the following steps.

S701: The mobile phone establishes a Bluetooth communication connection to the smart watch via Bluetooth.

A specific implementation of S701 is the same as a specific implementation of S201. For details, refer to content related to S201. Details are not described herein again.

S702: The smart watch starts the one-number-multi-terminal service via the mobile phone.

A specific implementation of S702 is the same as processes in S202 to S209 described above. For details, refer to content related to S202 to S209. Details are not described herein again.

S703: The smart watch determines whether the user falls asleep.

The mobile phone maintains the Bluetooth connection to the smart watch, and the smart watch may detect, by using the sensor module 403, whether the user falls asleep. For details, refer to content related to S503. Details are not described herein again.

S704: The mobile phone receives a first message from the smart watch, where the first message is used to indicate that the user has fallen asleep.

If determining that the user is in sleep, the smart watch may send the first message to the mobile phone, to notify the mobile phone that the user has fallen asleep. The first message may also be considered as a first instruction that is an instruction for instructing the mobile phone to enter the power-saving mode. In this embodiment of this application, the power-saving mode of the mobile phone may be defined. For example, the mobile phone entering the power-saving mode means that the mobile phone turns off the one or more functional modules. Clearly, if the smart watch determines that the user has not fallen asleep, the smart watch does not send the first message.

S705: The mobile phone turns off the one or more functional modules.

It should be understood that, when the user is awake, as the user uses various functions of the mobile phone, various functional modules of the mobile phone are in a normal working state, that is, the functional modules are all in a power-on state. For example, the main processor 301, the coprocessor 302, the Bluetooth module 304, the sensor module 303, the modem 305, and the like that are included in the mobile phone are all in a normal working state. For example, the main processor 301 may control the Bluetooth module 304, so that the mobile phone maintains the Bluetooth connection to the smart watch, and supports all Bluetooth functions. The coprocessor 302 may control the Bluetooth module 304 to receive some information from the smart watch, for example, the first message and other possible Bluetooth data, and parse the data from the smart watch. It may be considered that a Bluetooth function of the mobile phone is divided into two parts. One part is implemented based on the main processor 301, and the other part is implemented based on the coprocessor 302.

However, when the user is in sleep, the user usually does not use the mobile phone. To reduce energy consumption of the mobile phone, the mobile phone may be switched to the standby mode (also referred to as a sleep mode). To be specific, the functional modules included in the mobile phone are still powered on, and only some functional modules are switched to the low-power mode. In other words, the main processor 301 of the mobile phone is still in a power-on state, and only some cores running on the main processor 301 stop working. For example, Wi-Fi/GPS scanning may be stopped to reduce wake-up; or some modules turn to the low-power mode, where for example, the BT module 304, a Wi-Fi module, and the modem 305 each send a keep-alive frame periodically.

To further reduce energy consumption of the mobile phone, in this embodiment of this application, if the mobile phone determines that the user has fallen asleep, the mobile phone may turn off one or more included functional modules. Turning off the one or more functional modules included in the mobile phone may also be considered as stopping supplying power to the one or more functional modules, or performing power consumption reduction on the one or more functional modules. For example, when receiving the first message, the smart watch may turn off the functions of the main processor 301, the modem 305, and the like, that is, cut power to the main processor 301 and the modem 305. Compared with turning off some cores running on the main processor 301, in this embodiment of this application, cutting power to the main processor 301 and the modem 305, that is, stopping running of all cores of the main processor 301 and powering off the modem 305, can further reduce power consumption to a maximum degree. It should be understood that, the power-off operation performed on the main processor 301 and the modem 305 may be that the first power management module cuts power to the main processor 301 and the modem 305, and keeps powering on the Bluetooth module 304. For example, as shown in FIG. 3A and FIG. 3C, the first power management module cuts power to the main processor 301 and the modem 305, and keeps powering on the Bluetooth module 304. The coprocessor 302 may control communication between the Bluetooth module 304 and the smart watch. When the modem 305 of the smart watch is on and there is an incoming call, because the smart watch and the mobile phone may communicate with each other by using the Bluetooth module 304, the mobile phone may also implement a function of calling based on the Bluetooth communication with the smart watch. As shown in FIG. 3B, the first power management module cuts power to the main processor 301, the modem 305, and the coprocessor 302, and keeps powering on the Bluetooth module 304. In this case, the Bluetooth module 304 may perform a wake-up task, a task, for example, for waking up with a set interrupt task; for another example, for waking up by receiving information that is encapsulated according to a Bluetooth protocol and sent by another device; or for waking up the main processor 301 and the modem 305 in response to a Bluetooth wake-up message triggered by the smart watch.

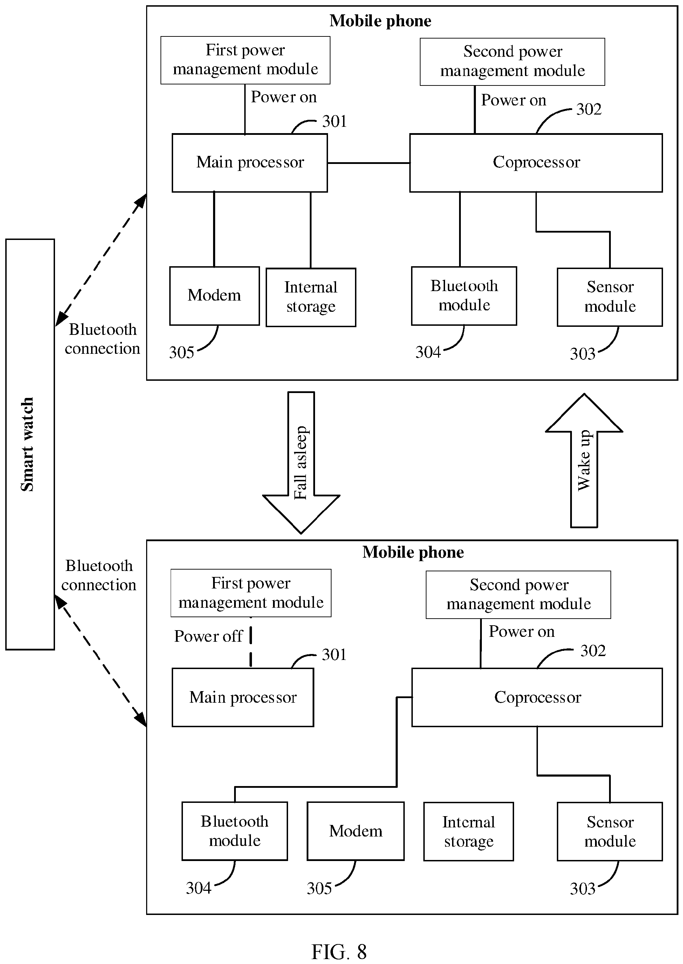

FIG. 8 is a block diagram of a principle of saving energy on the mobile phone. In FIG. 8, turning off the main processor 301, the modem 305, and an internal storage is used as an example. It should be understood that FIG. 8 is merely an example. In a possible implementation, a function of another possible module may be further turned off. The mobile phone cuts power to the main processor 301, the modem 305, and the internal storage. In this case, the coprocessor 302 may control the mobile phone to maintain the Bluetooth connection to the smart watch, to receive a message from the smart watch. Although the mobile phone turns off the modem 305, the mobile phone maintains the Bluetooth connection to the smart watch via Bluetooth, and the modem 305 of the smart watch is on a network. Therefore, it can be ensured that an incoming call, an SMS message, and the like for the user are not affected.

In addition, data of the Bluetooth module is stored in a static random-access memory (static random-access memory, SRAM) of the Bluetooth module, and data of the coprocessor 302 is also stored in a static random-access memory (static random-access memory, SRAM) of the coprocessor 302. Therefore, when the user falls asleep, the mobile phone may further turn off the internal storage, for example, a double data rate (double data rate, DDR) memory.

In this embodiment of this application, the user falls asleep, and the mobile phone turns off the one or more included functional modules. Compared with that in switching the mobile phone to the standby mode (also referred to as a sleep mode), power consumption is clearly lower because power supply to some functional modules is cut.

S706: The smart watch determines whether the user wakes up.

The mobile phone maintains the Bluetooth connection to the smart watch, and the smart watch may detect, by using the sensor module 303, whether the user wakes up. For details, refer to content related to S503. Details are not described herein again.

S707: The mobile phone receives a second message from the smart watch, where the second message is used to indicate that the user has woken up.

It should be understood that when the user wakes up, to not affect usage of the mobile phone by the user, the one or more functional modules that have been turned off need to be turned on. That is, power supply to the one or more functional modules is restored. When detecting that the user wakes up, the smart watch may send the second message to the mobile phone, to notify the mobile phone that the user has woken up. Clearly, if determining that the user has not woken up, the smart watch may not send the second message.

S708: The mobile phone receives the second message, and turns on the one or more functional modules.

When the mobile phone receives the second message, it may be considered that the one or more functional modules that have been turned off need to be turned on. Still refer to FIG. 8. The user wakes up, and the mobile phone restores power to the main processor 301, the modem 305, and the internal storage. For example, when the coprocessor 302 determines that the user using the mobile phone wakes up, the coprocessor 302 may control the first power management module to perform a power-on operation on the main processor 301 and the modem 305. In this case, the main processor 301 may control a connection and a disconnection between the Bluetooth module 304 of the mobile phone and the smart watch. For example, because the modem 305 of the mobile phone is on, and can implement the function of calling or SMS with another user without assistance of the smart watch, the main processor 301 may control the Bluetooth module 304 of the mobile phone to be disconnected from the smart watch.

It should be noted that, when the mobile phone determines that the user wakes up, in addition to restoring power to the main processor 301 and the modem 305, the smart watch may enter the standby mode again, and clearly, may alternatively exit the standby mode.

It should be noted that, in the procedure shown in FIG. 7, an example in which the mobile phone determines whether the user falls asleep to determine whether the smart watch satisfies a condition for power saving is used in S703. S703 may also be considered as determining whether the mobile phone satisfies the condition for power saving. If the user falls asleep, the mobile phone satisfies the condition for power saving. Correspondingly, S703 may also be considered as determining whether the mobile phone does not satisfy the condition for power saving. If the user wakes up, the mobile phone does not satisfy the condition for power saving. For a specific implementation of the condition for power saving, refer to content related to the foregoing embodiment of FIG. 5. Details are not described herein again.

### Embodiment 3

After the smart watch establishes a connection to the mobile phone, as long as any modem 305 of the smart watch or the mobile phone is on, a function, for example, calling or SMS, is not affected. If the smart watch establishes the connection to the mobile phone, and the smart watch has a higher battery level, and the mobile phone has a lower battery level, the mobile phone may enter the power-saving mode. On the contrary, if the smart watch has a lower battery level, and a battery level of the mobile phone is high enough, the smart watch may enter the power-saving mode.

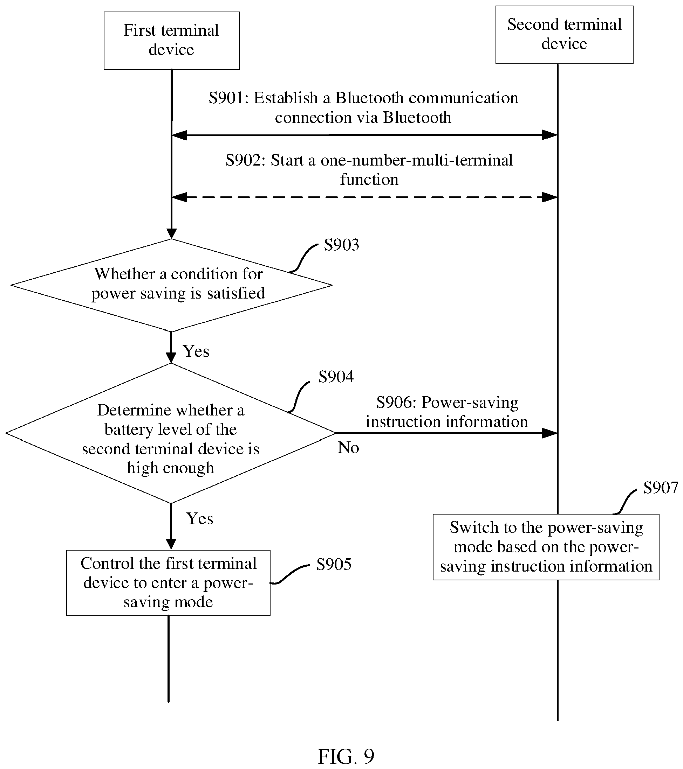

FIG. 9 is a schematic flowchart of a third energy-saving method according to an embodiment of this application. The method may be performed by two terminal devices. For ease of description, in this embodiment of this application, a first terminal device and a second terminal device are used as examples. The first terminal device may be a smart watch, and correspondingly, the second terminal device is a mobile phone; or the first terminal device may be a mobile phone, and correspondingly, the second terminal device is a smart watch. As shown in FIG. 9, a procedure of the method includes the following steps.

S901: The first terminal device establishes a Bluetooth connection to the second terminal device via Bluetooth.

A specific implementation of S901 is the same as a specific implementation of S201. For details, refer to content related to S201. Details are not described herein again.

S902: The second terminal device and the first terminal device start a one-number-multi-terminal service.

A specific implementation of S902 is the same as processes in S202 to S209 described above. For details, refer to content related to S202 to S209. Details are not described herein again.

S903: The first terminal device determines whether a condition for power saving is satisfied.

If the first terminal device satisfies the condition for power saving, the first terminal device may enter a power-saving mode, that is, turn off one or more included functional modules.

In some embodiments, the condition for power saving may be that a user falls asleep; the condition for power saving may be that a profile mode of the first terminal device is a manner mode, a do-not-disturb mode, a conference mode, or the like; or the condition for power saving may be that a current moment is within a preset range of time for power saving. It should be understood that, the condition for power saving is merely an example. Any condition that satisfies a power saving requirement in actual use may be considered as a condition for triggering power saving.

S904: The first terminal device determines whether a battery level of the second terminal device is high enough.

It should be understood that, if a battery level of the first terminal device is high enough, for ease of use, there is no need to enter the power-saving mode. Similarly, if a battery level of the second terminal device is high enough, for ease of use, there is no need to enter the power-saving mode either. When the first terminal device and the second terminal device establish the Bluetooth connection, as any modem of the first terminal device or the second terminal device is on, a function, for example, calling and SMS, is not affected. Therefore, it may be determined whether the first terminal device and the second terminal device enter the power-saving mode to better satisfy actual energy saving requirements of the first terminal device and the second terminal device.

For example, when determining whether to enter the power-saving mode, the first terminal device may determine whether the battery level of the second terminal device is high enough. If the battery level of the second terminal device is not high enough, the second terminal device may preferentially enter the power-saving mode. On the contrary, if the battery level of the second terminal device is high enough, the first terminal device may preferentially enter the power-saving mode.

In this embodiment of this application, there are a plurality of manners of determining whether the battery level of the second terminal device is high enough, for example, the several manners listed below.

In a first manner, whether the battery level of the second terminal device is high enough is determined based on whether the second terminal device is being charged.

If the second terminal device is being charged, naturally, there is no need to enter the power-saving mode, and it may be considered that the battery level of the second terminal device is high enough. For example, the first terminal device may send a second request message to the second terminal device, where the second request message may be used to request the second terminal device to report whether the second terminal device is being charged. The second terminal device receives the second request message, and may obtain charging information of the second terminal device and send the obtained charging information to the first terminal device. The first terminal device receives the charging information, and may determine, based on the charging information, whether the second terminal device is being charged, to determine whether the battery level of the mobile phone is high enough.

In a second manner, whether the battery level of the second terminal device is high enough is determined based on battery level information of the second terminal device.

If the battery level of the second terminal device is higher than the battery level of the first terminal device, it may be considered that the battery level of the second terminal device is high enough for the first terminal device. Alternatively, if a remaining battery time of the second terminal device is longer than a remaining battery time of the first terminal device, it may be considered that the battery level of the second terminal device is high enough for the first terminal device.

For example, the first terminal device may send a third request message to the second terminal device, and the third request message may be used to request the second terminal device to report the battery level information of the second terminal device. The second terminal device receives the third request message, and may obtain the battery level or the remaining battery time of the second terminal device and send the battery level information of the second terminal device to the first terminal device, where the battery level information includes the battery level or the remaining battery time of the second terminal device. The first terminal device receives the battery level information, and may determine, based on the battery level information, whether the battery level of the second terminal device is high enough. For example, if the battery level information includes the battery level of the second terminal device, the first terminal device may compare the battery level of the second terminal device with the battery level of the first terminal device. If the battery level of the second terminal device is higher than the battery level of the first terminal device, the battery level of the second terminal device is high enough. On the contrary, if the battery level of the second terminal device is lower than or equal to the battery level of the first terminal device, the battery level of the second terminal device is not high enough. If the battery level information includes the remaining battery time of the second terminal device, the first terminal device may compare the remaining battery time of the second terminal device with the remaining battery time of the first terminal device. If the remaining battery time of the second terminal device is longer than the remaining battery time of the first terminal device, the battery level of the second terminal device is high enough. On the contrary, if the remaining battery time of the second terminal device is shorter than or equal to the remaining battery time of the first terminal device, the battery level of the second terminal device is not high enough.

In a third manner, whether the battery level of the second terminal device is high enough is determined based on whether the second terminal device is being charged and the battery level information of the second terminal device.

Although the battery level (or the remaining battery time) of the second terminal device is less than the battery level (or the remaining battery time) of the first terminal device, when the second terminal device is being charged, it may also be considered that the battery level of the second terminal device is high enough.

For example, the first terminal device may first determine whether the second terminal device is being charged. If the second terminal device is not being charged, the first terminal device continues to determine, based on the battery level information of the second terminal device, whether the battery level of the second terminal device is high enough. For a specific implementation, refer to related descriptions of the first manner and the second manner. Details are not described herein again.

S905: The first terminal device determines that the battery level of the second terminal device is high enough, and the first terminal device enters the power-saving mode.

If the battery level of the second terminal device is high enough, the first terminal device may preferentially enter the power-saving mode. In other words, the first terminal device may turn off the functions of the one or more functional modules included in the first terminal device. For details, refer to related content in the embodiment shown in FIG. 5. Details are not described herein again.

S906: The first terminal device determines that the battery level of the second terminal device is not high enough, and the first terminal device sends power-saving instruction information to the second terminal device, where the power-saving instruction information instructs the second terminal device to enter the power-saving mode.

If the battery level of the second terminal device is high enough, the second terminal device may preferentially enter the power-saving mode. When the first terminal device determines that the battery level of the second terminal device is not high enough, the first terminal device may send the power-saving instruction information to the second terminal device. The power-saving instruction information instructs the second terminal device to enter the power-saving mode.

S907: The second terminal device switches to the power-saving mode according to the power-saving instruction information.

The second terminal device receives the power-saving instruction information, and may turn off functions of one or more functional modules included in the second terminal device. For details, refer to related content in the embodiment shown in FIG. 7. Details are not described herein again.

It should be noted that, that the third energy-saving method in FIG. 9 is performed by the smart watch and the mobile phone is merely used as an example. The method is applicable to any two terminal devices that establish a communication connection. Therefore, S902 is an optional step, that is, a step that may not be performed. Therefore, S902 is shown by using a dotted line.

In addition, a sequence of executing S901 to S903 is not limited in this embodiment of this application. To be specific, the first terminal device may perform S901, S902, and S903 sequentially, or may perform S903, S901, and S902 sequentially.

### Embodiment 4

How the smart watch and the mobile phone each reduce energy consumption as far as possible is described above in Embodiment 1 to Embodiment 3. It should be understood that, when any electronic device is turned off, each functional module of the electronic device is turned off, and in this case, most energy is saved. However, to reduce power consumption of a terminal device by scheduling the device to turn on and off, because of the scheduled turn-on and turn-off, it is inevitable that the terminal device may automatically shut down when a user is using the terminal device, resulting in poor user experience.

Therefore, an embodiment of this application provides a fourth energy-saving method. In the energy-saving method, a turn-on time and a turn-off time of an electronic device may be flexibly set according to sleep habits of a user, to reduce energy consumption to a maximum degree.

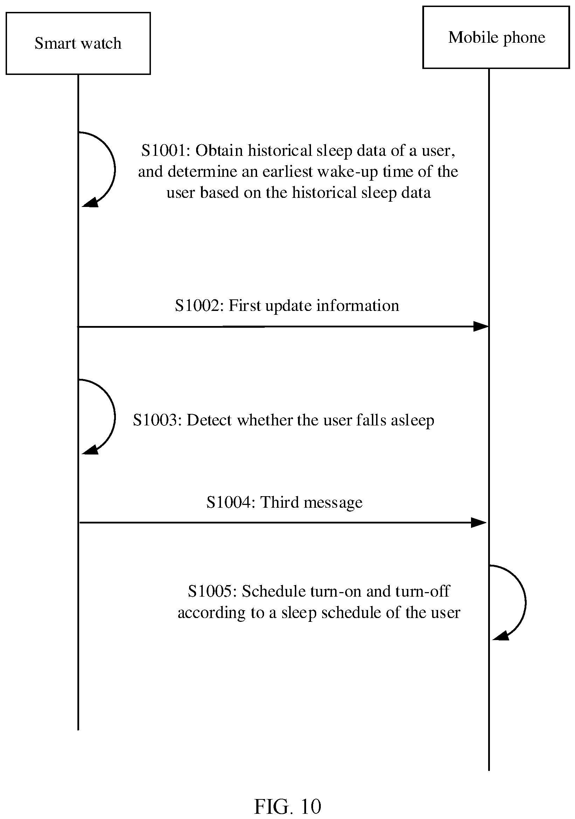

FIG. 10 is a schematic flowchart of the fourth energy-saving method according to this embodiment of this application. The method may be performed by the smart watch shown in FIG. 1. As shown in FIG. 10, a procedure of the method includes the following steps.

S1001: The smart watch obtains historical sleep data of a user, and determines an earliest wake-up time of the user based on the historical sleep data.

This embodiment of this application is intended to set a turn-on time and a turn-off time of an electronic device flexibly according to sleep habits of the user, to reduce energy consumption of the electronic device to a maximum degree. For example, the smart watch may obtain the historical sleep data of the user, for example, including the earliest wake-up time and a latest sleep time of the user within a period of time, to estimate, based on the historical sleep data, a possible earliest wake-up time of the user, that is, a time at which the user awakes.

The smart watch may obtain the historical sleep data of the user with triggering of the user, to determine the earliest wake-up time of the user, or may periodically obtain the historical sleep data of the user, to determine the earliest wake-up time of the user in each cycle.

S1002: The smart watch sends first update information to the mobile phone, where the first update information is used to update the turn-on time in a sleep schedule of the user.

The turn-on time stored on the mobile phone may not be the earliest wake-up time of the user. In this case, the mobile phone cannot be turned on in time, and a usage time of the user is missed, resulting in poor user experience. In this case, after determining the earliest wake-up time of the user based on the historical sleep data, the smart watch may notify the mobile phone of the earliest wake-up time. For example, the smart watch may send the first update information to the mobile phone via Bluetooth, where the first update information may include the earliest wake-up time of the user. The mobile phone receives the first update information, and may set the turn-on time to the earliest wake-up time, to prevent the mobile phone from missing the usage time of the user.

S 1003: The smart watch detects whether the user falls asleep.

The smart watch may detect whether the user falls asleep. For details, refer to content related to S503. Details are not described herein again.

S1004: The smart watch sends a third message to the mobile phone, to notify the mobile phone that the user is in sleep.

The smart watch determines that the user falls asleep, and may send the third message to the mobile phone, to notify the mobile phone user that the user is in sleep. The mobile phone receives the third message, and may perform S1005.

S 1005: The mobile phone schedules to turn on and off according to the sleep schedule of the user.

The third message may also be considered as an instruction for instructing the mobile phone to turn off and scheduling turn-on at a set time. The sleep schedule of the user may maintain the latest sleep time of the user and the earliest wake-up time of the user. The mobile phone receives the third message, and may turn off and schedule turn-on at the set time according to the earliest wake-up time of the user in the sleep schedule of the user.

In this embodiment of this application, the smart watch can set a turn-on time and a turn-off time of another electronic device, for example, the mobile phone, flexibly according to the sleep habits of the user, to reduce energy consumption to a maximum degree.

Based on the foregoing embodiments, an embodiment of this application further provides a terminal device. The terminal device is, for example, a mobile phone, a portable computer, a smart speaker, or a smart watch. The terminal device may include one or more processors and one or more memories. Each memory is configured to store one or more programs. The foregoing components may be connected to each other through one or more communications buses. When the one or more programs stored in the memory are executed by the one or more processors, the terminal device may be configured to perform the steps in the embodiments shown in FIG. 5, FIG. 7,

FIG. 9, or FIG. 10 or another corresponding embodiment.

The implementations of this application may be combined in any way to achieve different technical effects.

In the foregoing embodiments according to this application, the method according to the embodiments of this application is described from a perspective that the method is performed by an electronic device (a smart watch or a mobile phone). To implement the functions in the method according to the foregoing embodiments of this application, the electronic device may include a hardware structure and/or a software module, to implement the functions in a form of the hardware structure, the software module, or a combination of the hardware structure and the software module. Whether a specific function in the functions is performed by the hardware structure, the software module, or the combination of the hardware structure and the software module depends on particular applications and design constraints of the technical solutions.

With reference to the foregoing descriptions, a specific process of implementing the embodiments of this application is described below. In the embodiments of this application, "at least one" means one or more, and "a plurality of' means two or more. In addition, it should be understood that in the descriptions of this application, terms such as "first" and "second" are merely used for distinguishing in descriptions, but should not be understood as indicating or implying relative importance, or should not be understood as indicating or implying a sequence.

Terms used in the following embodiments are merely intended to describe specific embodiments, but are not intended to limit this application. As used in the description and the appended claims of this application, the terms "one", "a", "the", "this" of singular forms are intended to further include expressions such as "one or more", unless otherwise specified in the context clearly. It should be further understood that, in the embodiments of this application, "one or more" means one, two, or more; and "and/or" describes an association relationship between associated objects, and represents that three relationships may exist. For example, A and/or B may represent a case in which only A exists, both A and B exist, or only B exists, where A and B may be singular or plural. The character "/" generally indicates an "or" relationship between associated objects.

Reference to "an embodiment", "some embodiments", or the like described in this specification indicates that one or more embodiments of this application includes/include a specific feature, structure, or characteristic described with reference to the embodiment. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "have", and their variants all mean "include but are not limited to", unless otherwise particularly emphasized in another manner.

A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of the process and/or the block in the flowcharts and/or the block diagrams. These computer program instructions may be provided to a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto the computer or the another programmable data processing device, so that a series of operations and steps are performed on the computer or the another programmable device to generate computer-implemented processing. Therefore, the instructions executed on the computer or the another programmable device provide steps for implementing the specific function in one or more procedures in the flowcharts and/or in one or more blocks in the block diagrams.

Clearly, a person skilled in the art can make various modifications and variations to the embodiments of this application without departing from the scope of the embodiments of this application. This application is intended to cover these modifications and variations to the embodiments of this application provided that they fall within the scope of protection defined by the following claims of this application and equivalent technologies thereof.

## Claims

1. An energy-saving method, applied to a first terminal device, wherein the first terminal device and a second terminal device are bound with a one-number-multi-terminal service, and the method comprises:
when a condition for power saving is satisfied, performing a power-off operation on a baseband module and an application processor AP core of the first terminal device, and controlling a Bluetooth module of the first terminal device to be in a power-on state.

2. The method according to claim 1, wherein the performing a power-off operation on a baseband module and an AP core of the first terminal device comprises:
controlling to power off a main processor of the first terminal device, wherein the AP core is integrated into the main processor, the Bluetooth module is connected to a coprocessor of the first terminal device, the coprocessor is configured to control the Bluetooth module to communicate with the second terminal device, the coprocessor is connected to the main processor, and the coprocessor and the main processor run different operating systems; or
controlling to power off the main processor if it is determined that the condition for power saving is satisfied, wherein the AP core, the baseband module, and the Bluetooth module are integrated into the main processor, the Bluetooth module is configured to respond to a wake-up message from the second terminal device, and the wake-up message is used to indicate a task for waking up the baseband module and/or the AP core.

3. The method according to claim 1 or 2, wherein the condition for power saving comprises at least one of the following conditions:
a user using the first terminal device and the second terminal device falls asleep;
the first terminal device or the second terminal device is in a profile mode, a manner mode, a do-not-disturb mode, or a conference mode;
first scenario information of the first terminal device or the second terminal device satisfies a preset condition, wherein the first scenario information comprises at least one of information about a location of a scenario and information about a time for power saving;
the first terminal device or the second terminal device is in a preset power-saving time period;
the first terminal device or the second terminal device is in a power-saving mode; and
first power-saving instruction information from the second terminal device is received, wherein the first power-saving instruction information instructs the first terminal device to perform a power-off operation.

4. The method according to claim 3, wherein the method further comprises:
obtaining first configuration information from the second terminal device, wherein the first configuration information is used to determine whether the first terminal device satisfies the condition for power saving, and the first configuration information is used to indicate at least one of the first scenario information of the second terminal device, the preset power-saving time period for the second terminal device, and whether the second terminal device is currently in the power-saving mode.

5. The method according to any one of claims 1 to 4, wherein the method further comprises:
when the condition for power saving is not satisfied, performing a power-on operation on the baseband module and the application processor AP core of the first terminal device.

6. The method according to claim 5, wherein the performing a power-on operation on the baseband module and the application processor AP core of the first terminal device comprises:
controlling, based on the coprocessor, a power management module of the main processor to power on the main processor again.

7. The method according to claim 1, wherein before the performing a power-off operation on a baseband module and an application processor AP core of the first terminal device, the method further comprises:
determining that a device that needs to save power in the first terminal device and the second terminal device is the first terminal device; or determining that a device that needs to save power in the first terminal device and the second terminal device is the second terminal device, and then sending second power-saving instruction information to the second terminal device, wherein the second power-saving instruction information instructs the second terminal device to perform a power-off operation.

8. The method according to claim 7, wherein that the first terminal device determines the device that needs to save power in the first terminal device and the second terminal device comprises:
determining information about a target battery level of the second terminal device, wherein the information about the target battery level is used to indicate that a remaining battery level of the second terminal device is a first battery level; and
comparing a current battery level of the first terminal device with the first battery level, and determining that a terminal device corresponding to a lower battery level in the current battery level and the first battery level is the device that needs to save power.

9. The method according to claim 7, wherein that the first terminal device determines the device that needs to save power in the first terminal device and the second terminal device comprises:
obtaining a performance parameter of the second terminal device, wherein the performance parameter is used to indicate a performance indicator of the second terminal device; and
comparing a performance indicator of the first terminal device with the performance indicator of the second terminal device, and determining that a terminal device corresponding to a lower performance indicator is the device that needs to save power.

10. The method according to claim 8, wherein before the first terminal device determines that the terminal device corresponding to the lower battery level is the device that needs to save power, the method further comprises:
determining that the terminal device corresponding to the lower battery level is in an uncharged state.

11. The method according to any one of claims 1 to 10, wherein the method comprises:
obtaining historical sleep data of the user, and determining an earliest wake-up time of the user based on the historical sleep data; and
sending first update information to the second terminal device, wherein the first update information is used to update an automatic turn-on time of the second terminal device.

12. An energy-saving method, applied to a second terminal device, wherein the second terminal device and a first terminal device are bound with a one-number-multi-terminal service, and the method comprises:
receiving first indication information from the first terminal device, wherein the first indication information indicates that the second terminal device satisfies a condition for power saving; and
performing a power-off operation on a baseband module and an application processor AP core of the second terminal device, and controlling a Bluetooth module of the second terminal device to be in a power-on state.

13. The method according to claim 12, wherein the performing a power-off operation on a baseband module and an application processor AP core of the second terminal device comprises:
controlling to power off a main processor of the second terminal device, wherein the AP core is integrated into the main processor, the Bluetooth module is connected to a coprocessor of the second terminal device, the coprocessor is configured to control the Bluetooth module to communicate with the first terminal device, the coprocessor is connected to the main processor, and the coprocessor and the main processor run different operating systems; or
controlling to power off a main processor of the second terminal device, wherein the AP core, the baseband module, and the Bluetooth module are integrated into the main processor, the Bluetooth module is configured to respond to a wake-up message from the first terminal device, and the wake-up message is used to indicate a task for waking up the baseband module and/or the AP core.

14. The method according to claim 12 or 13, wherein the method further comprises:
receiving second indication information from the first terminal device, wherein the second indication information indicates that the second terminal device does not satisfy the condition for power saving; and
performing a power-on operation on the baseband module and the AP core of the second terminal device.

15. The method according to any one of claims 12 to 14, wherein the condition for power saving comprises at least one of the following conditions:
a user using the first terminal device and the second terminal device falls asleep;
the first terminal device or the second terminal device is in a profile mode, a manner mode, a do-not-disturb mode, or a conference mode;
first scenario information of the first terminal device or the second terminal device satisfies a preset condition, wherein the first scenario information comprises at least one of information about a location of a scenario and information about a time for power saving;
the first terminal device or the second terminal device is in a preset power-saving time period; and
the first terminal device or the second terminal device is in a power-saving mode.

16. An electronic device, comprising one or more processors and one or more memories, wherein
the one or more memories are coupled to the one or more processors, the one or more memories are configured to store computer program code, the computer program code comprises computer instructions, and when the one or more processors execute the computer instructions, the electronic device performs the method according to any one of claims 1 to 15.

17. A computer storage medium, comprising computer instructions, wherein when the computer instructions are run on an electronic device, the electronic device is enabled to perform the method according to any one of claims 1 to 15.

18. A computer program product, wherein when the computer program product runs on a computer, the computer is enabled to perform the method according to any one of claims 1 to 15.
